# EUROPEAN PATENT SPECIFICATION

(11) **EP 1 956 058 B1**
(45) Date of publication and mention of the grant of the patent: **12.08.2009**
(21) Application number: 08000813.9
(22) Date of filing: 17.01.2008
(51) Int. Cl.: C09D 11/00, C08K 5/521

(54) **Ink composition for inkjet-recording and method for inkjet-recording**
Tintenzusammensetzung zur Tintenstrahlaufzeichnung und Verfahren zur Tintenstrahlaufzeichnung
Composition d'encre pour une impression à jet d'encre et procédé d'impression à jet d'encre

(30) Priority: 06.02.2007 JP 2007027213
(43) Date of publication of application: 13.08.2008
(73) Proprietor: FUJIFILM Corporation, Minato-ku Tokyo (JP)
(72) Inventor: Watanabe, Kotaro, Ashigarakami-gun Kanagawa (JP)
(74) Representative: HOFFMANN EITLE

(56) References cited:
- DATABASE WPI Week 200539 Derwent Publications Ltd., London, GB; AN 2005-376749 XP002473557 & JP 2005 126540 A (UNION CHEMICAL CO LTD) 19 May 2005 (2005-05-19)
- DATABASE WPI Week 200708 Derwent Publications Ltd., London, GB; AN 2007-078895 XP002473558 & JP 2006 328227 A (FUJI PHOTO FILM CO LTD) 7 December 2006 (2006-12-07)
- DATABASE WPI Week 199619 Derwent Publications Ltd., London, GB; AN 1996-185062 XP002473559 & JP 08 060048 A (AJINOMOTO KK) 5 March 1996 (1996-03-05)
- DATABASE WPI Week 198547 Derwent Publications Ltd., London, GB; AN 1985-293931 XP002473560 & JP 60 203624 A (TOSHIBA KK) 15 October 1985 (1985-10-15)

## Description

### BACKGROUND OF THE INVENTION

### Field of the Invention

The present invention relates to an ink composition for inkjet-recording and a method for inkjet-recording using the ink composition for inkjet-recording. More particularly, the invention relates to an inkjet-recording ink composition, wherein neither generation of precipitates nor phase separation occurs easily, permitting the image portion to have a sufficient flexibility and adhesiveness after curing, and an inkjet-recording method using the same.

### Description of the Related Art

As image-recording methods in which images are formed on a recording medium such as paper on the basis of image data signals, there have been known, for instance, the electrophotogaphy technique, the sublimation-type and melt-type thermal ink-transfer techniques, and the inkjet-recording technique. The electrophotogaphy technique requires the use of a process for forming an electrostatic latent image on a drum made of a light-sensitive material through charging and light-exposure operations, and thus, such techniques becomes complex, resulting in problems such as increased production cost. In addition, the device used in the thermal ink-transfer technique is rather cheap, but this technique suffers from problems in that the technique requires the use of an ink ribbon, and this in turn leads to an increase in the running cost and the generation of a large amount of waste matter.

On the other hand, the inkjet-recording technique uses a cheap device and is a technique in which images are directly formed on a recording medium by ejecting an ink only on the desired image portion. Accordingly, this technique permits the efficient use of the ink and requires a reduced running cost. Furthermore, the inkjet-recording technique is less noisy, and it is therefore excellent as an image-recording technique.

The ink composition usable in the inkjet recording should be a radiation-curing type ink composition which is curable by irradiation of active radiation such as ultraviolet rays. Accordingly, an ink composition which is curable with a high sensitivity and is able to form a high quality image has been demanded. Since an increased curability of a radiation-curing type ink composition may be obtained by attaining an improved sensitivity through irradiation with active radiation, this may result in various advantages such as decreased electricity consumption, and increased lifetime due to the decreased load on an active radiation generator, as well as prevention of the volatilization of uncured low molecular weight compounds, and suppression of the reduction in the strength of images formed. Improvement in the strength of the cured film due to highly improved sensitivity in the radiation-curing type ink composition may impart high strength and durability in an image portion formed by the ink composition.

Although such an ink composition exhibits an excellent strength of the formed image portion, its flexibility is poor. When this ink composition is applied to a recording medium, such as a resin film, which is excellent in bendability and flexibility, the image formed does not conform with the deformation of the recording medium, causing a problem that damage such as a crack is generated depending on the mode of use.

As the ultraviolet-curing type inkjet composition, an ink composition, in which monomers each having a mutually different functional group among monofunctional monomers or polyfunctional monomers are combined and used, has been proposed (for example, see Japanese Patent Application Laid-Open (JP-A) No. 5-214280). Further, a composition containing a polyfunctional acrylate has been proposed as the radiation-curing type ink composition (for example, see JP-A No. 8-41133).

Although any of these ink compositions exhibit an excellent curability, the flexibility of the coating film formed by using these has been insufficient.

Moreover, in the inkjet recording technique, a technique where an ink composition is prepared by combining a phosphoric acid group-containing polymerizable compound and another polymerizable compound in order to improve an adhesiveness to substrates and to prevent peeling from the recording material so that solid images may be formed is disclosed in JP-A No. 2006-328227. It is deduced that the polarity of the phosphoric acid group influences the adhesiveness to the recording material.

As described above, development of an ink composition for inkjet recording, providing images exhibiting sufficient flexibility, as well as adhesiveness to the recording medium after curing of the ink, has been demanded under the current circumstances.

### SUMMARY OF THE INVENTION

As a result of extensive studies by the present inventors, they have found that use of a specific phosphoric acid ester monomer in an ink composition makes a cured product after curing exhibit a sufficient flexibility and a sufficient adhesiveness to a substrate when the cured product is formed on the substrate. Moreover, this ink composition causes neither generation of precipitates nor phase separation easily in the ink and has been found to be suitable for an ink composition for inkjet recording, whereby the present invention has been completed.

Namely, a first aspect of the present invention relates to an ink composition for inkjet recording, which comprises: (A) a compound represented by the following Formula (1); and (B) a radical polymerization initiator.

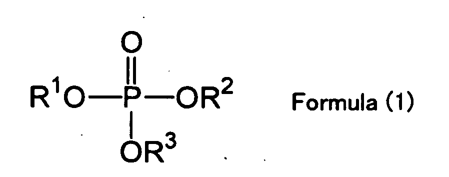

In the Formula (1), R¹, R², and R³ each independently represent a monovalent group having an alkyl group, an aryl group or a polymerizable double bond; at least one of R¹, R², and R³ is an alkyl group or an aryl group; and at least one of R¹, R², and R³ is a monovalent group having a polymerizable double bond.

A second aspect of the present invention relates to a method for inkjet recording, comprising: ejecting the ink composition for inkjet recording of the first aspect of the present invention onto a recording medium; and curing the ejected ink composition for inkjet recording by irradiation with active radiation.

### DETAILED DESCRIPTION OF THE INVENTION

Since the ink composition of the present invention will cause neither generation of precipitates nor phase separation easily and is cured by radiation such as ultraviolet rays, it can be used suitably for ink compositions for inkjet recording. Moreover, the image formed after curing of the ink composition exhibits a sufficient flexibility and adhesiveness.

Hereinafter, each component of the ink composition of the present invention will be successively explained. In addition, in this specification, the term "--to--" shows the range which includes the numerical value indicated before the "to" as the minimum and the numerical value indicated behind the "to" as the maximum, respectively.

### (A) Phosphoric acid ester monomer

The ink composition of the present invention contains a compound (hereinafter, also referred to as a "specific phosphoric acid ester monomer") represented by the Formula (1).

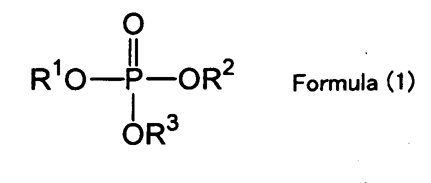

In the Formula (1), R¹, R², and R³ each independently represent a monovalent group having an alkyl group, an aryl group or a polymerizable double bond: provided that at least one of R¹, R², and R³ is an alkyl group or an aryl group; and at least one of R¹, R², and R³ is a monovalent group having a polymerizable double bond.

Although the reason why the ink composition containing the compound represented by the Formula (1) exhibits such an effect of the present invention has not been elucidated clearly, it is deduced to be as follows. However, the present invention is not to be limited by such a deduction.

It is deduced that adhesiveness of the compound represented by the Formula (1) is improved due to the presence of a phosphoric acid group in the skeletal structure.

In the Formula (1), at least one of R¹, R², and R³ is a monovalent group having a polymerizable double bond, but there is no case where all of R¹, R², and R³ are a monovalent group having a polymerizable double bond. That is, one or two polymerizable moieties are contained in the compound. In the case where three polymerizable moieties are present in the compound, a precise network is formed by a polymerization reaction, whereby a rigid polymer is produced. However, it is deduced that, since one or two polymerizable moieties are contained in the compound represented by the Formula (1), the cured product shows a sufficient flexibility.

Moreover, the compound represented by the Formula (1) has no hydroxyl group because all of the hydroxy moieties of the phosphoric acid are esterified. Since a hydroxy moiety of the phosphoric acid which is not esterified with the monovalent group having the polymerizable double bond is esterified with an alkyl group or an aryl group, the compound represented by the Formula (1) does not have any free hydroxyl group, is highly soluble in the highly hydrophobic ink composition and does not cause precipitates or phase separation easily in the composition.

In the Formula (1), the alkyl group represented by each of R¹, R² and R³ is an alkyl group having 1 or more carbon atoms, preferably an alkyl group having 1 to 20 carbon atoms, and more preferably an alkyl group having 1 to 12 carbon atoms.

The alkyl group may be any linear, branched or cyclic ones, and a linear or branched alkyl group is preferable from the viewpoint of ink solubility or low viscosity.

In the Formula (1), the preferable alkyl group represented by R¹, R², and R³ include specifically a methyl group, an ethyl group, an n-butyl group, an n-hexyl group, an n-nonyl group, and the like. More preferable examples are an ethyl group and an n-butyl group.

In the Formula (1), the alkyl group represented by R¹, R², and R³ may be substituted or unsubstituted. When each of R¹, R², and R³ is a substituted alkyl group, examples of the introducible substituent include preferably an alkoxy group, an aryl group, an aryloxy group, an acyl group, an amino group, a hydroxy group, a cyano group, a nitro group, a halogen atom, and the like.

In the Formula (1), the aryl group represented by each of R¹, R² and R³ is preferably an aryl group whose ring structure has 6 to 18 atoms, and more preferably 6 to 12 atoms. The aryl group may be a heterocyclic ring.

Specific examples of the aryl group represented by each of R¹, R² and R³ include a phenyl group and a naphthyl group, and preferably a phenyl group in view of the ink solubility or low viscosity.

The aryl group represented by each of R¹, R² and R³ may be substituted or unsubstituted.

In the case where R¹, R² and R³ are each a substituted aryl group, examples of the introducible substituent include preferably an alkyl group, an alkoxy group, an aryl group, an aryloxy group, an acyl group, an amino group, a hydroxy group, a cyano group, a nitro group, a halogen atom, and the like.

In the case where R¹, R² and R³ are each an alkyl group or an aryl group, especially preferable examples are a methyl group, an ethyl group, an n-butyl group, an n-hexyl group, an n-nonyl group, a phenyl group, and the like.

In the Formula (1), examples of the monovalent group having a polymerizable double bond, represented by each of R¹, R² and R³, include a (meth)acryloyl group, an allyl group, a styryl group, a vinyloxy group, and the like. The (meth)acryloyl group is preferable in view of the curing sensitivity.

More specifically, the compound represented by the Formula (1) is preferably a compound represented by the Formula (2) or a compound represented by the Formula (3), and a compound represented by the Formula (2-1) or a compound represented by the Formula (3-1) is more preferable.

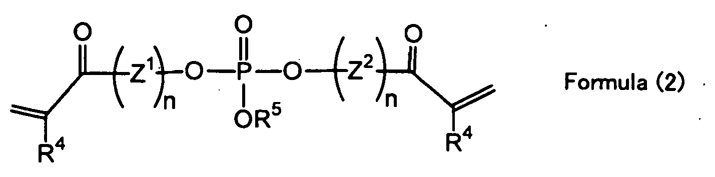

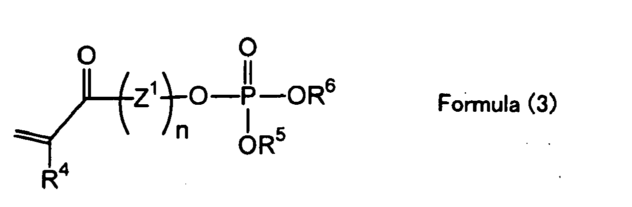

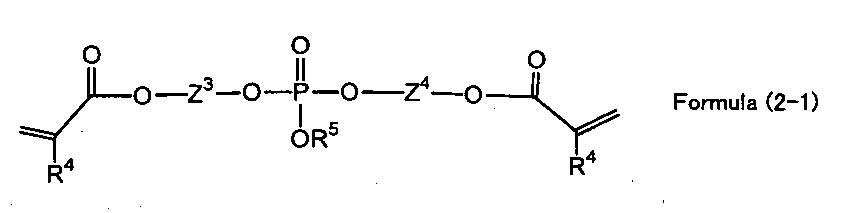

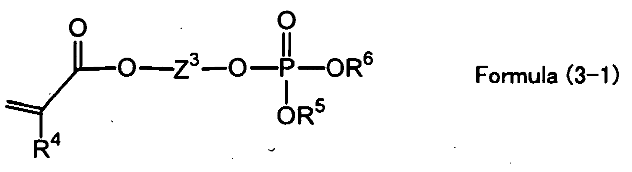

In the Formulae (2), (3), (2-1) and (3-1), R⁴ represents a methyl group or a hydrogen atom, and is preferably a methyl group.

In the Formulae (2), (3), (2-1) and (3-1), R⁵ and R⁶ each independently represent an alkyl group or an aryl group, and has the same meaning as defined for R¹, R² and R³.

In the Formulae (2), (3), (2-1) and (3-1), Z¹, Z², Z³, and Z⁴ each independently represent a divalent linking group.

Z¹, Z², Z³, and Z⁴ are each independently preferably a divalent linking group containing an alkylene group. The alkylene group is preferably an alkylene group having 1 to 20 carbon atoms. Specific examples thereof are an alkylene group having about 3 to 12 carbon atoms, such as a propylene group, a butylenes group, an octylene group and a nonylene group.

The alkylene group contained in Z¹, Z², Z³, and Z⁴ may be substituted or unsubstituted, and examples of the introducible substituent include an alkoxy group, an aryl group, an aryloxy group, an acyl group, an amino group, a hydroxy group, a cyano group, a nitro group, a halogen atom, and the like. Nevertheless, the alkylene group is preferably an unsubstituted alkylene group.

The divalent group containing an alkylene group may comprises only an alkylene group, or may contain a divalent group selected from -CO-, -O-, -S- or -NR⁷- in addition to the alkylene group, and the case of containing such a divalent group is preferable, and the case of containing an ether bond (-O-) is more preferable. Herein, R⁷ has the same meaning as the alkyl group defined for R¹, R² and R³.

The divalent linking group represented by Z¹, Z², Z³, and Z⁴ represents may be those composed of a combination of two or more divalent linking groups described above.

Z¹ and Z² are each the same or different. Also, Z³ and Z⁴ are each the same or different.

The divalent linking group represented by Z¹, Z², Z³, and Z⁴ is preferably a linking group represented by the following Structural Formula (1).

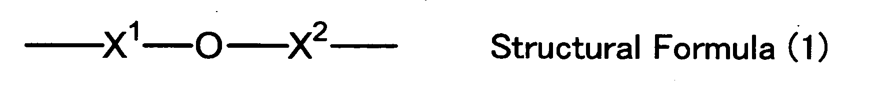

In the Structural Formula (1), X¹ and X² each independently represent an alkylene group, and is preferably an unsubstituted alkylene group, more preferably each independently an unsubstituted alkylene group having 2 to 7 carbon atoms, and still more preferably an unsubstituted alkylene group having 2 to 5 carbon atoms.

In the Formulae (2) and (3), n is 0 or 1.

Hereinafter, specific examples of the compound represented by the Formula (1) are shown, and the present invention is not limited thereto. Further, in the case where stereoisomers may exist in each of the exemplified compounds, any of these stereoisomers may be used, and a mixture of such stereoisomers may also be used.

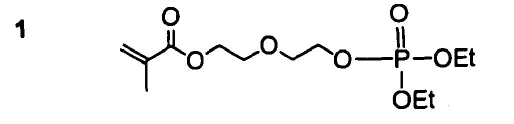

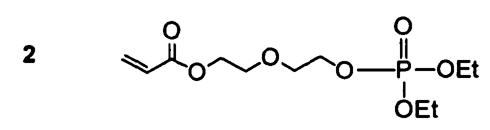

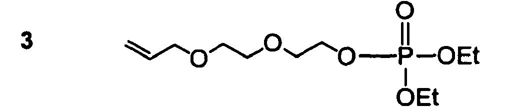

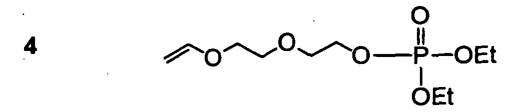

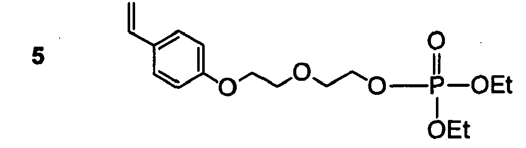

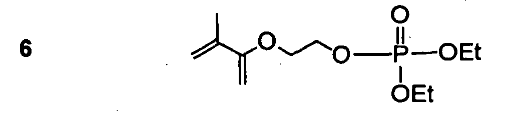

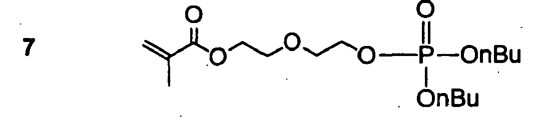

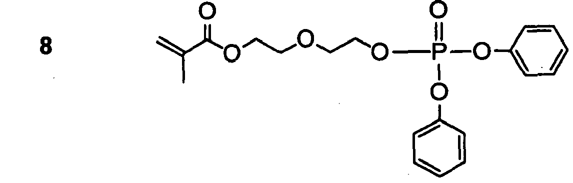

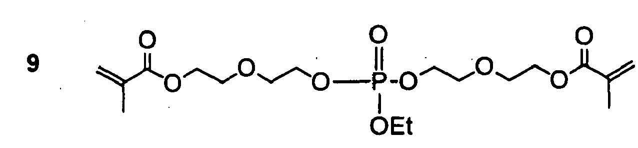

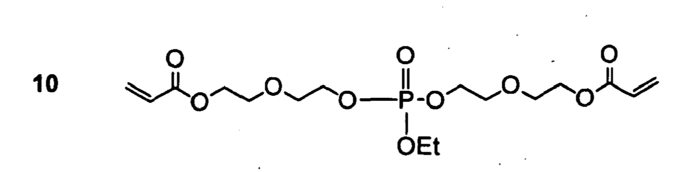

Among those exemplified compounds, the compounds (1), (2), and (7) to (10) having a (meth)acryloyl group in the molecule are preferred.

In the ink composition of the present invention, the content of the compound represented by the Formula (1) is preferably from 1 to 90% by mass, more preferably from 1 to 70% by mass, and still more preferably from 1 to 50% by mass, relative to the total solid content of the composition.

The compound represented by the Formula (1) may be synthesized according to the method as described in J. Org. Chem. 34, 968 (1969) and Jikken Kagaku Koza 5th ed. No. 16 Section 3 "Phosphoric Acid Esters" (published by Maruzen Co., Ltd.).

### (B) Radical polymerization initiator

The ink composition according to the present invention contains a radical polymerization initiator.

Any conventionally-known polymerization initiator may be appropriately selected and used as the radical polymerization initiator of the ink composition of the present invention in accordance with kinds of polymerizable compounds used therewith and utilization purposes of the ink composition.

The radical polymerization initiator used in the ink composition of the present invention is a compound which generates a polymerization initiation starter upon absorbing external energy. The external energy for starting the polymerization is roughly classified into heat, to which thermal polymerization initiators are applied; and radiation ray, to which photopolymerization initiators are applied. Examples of the radiation ray include γ-rays, β-rays, electron beams, ultraviolet rays, visible rays, and infrared rays.

Any conventionally-known thermal polymerization initiators and photopolymerization initiators may be used.

Preferable examples of the radical polymerization initiator used in the present invention include (a) aromatic ketones, (b) acylphosphine oxide compounds, (c) aromatic onium salt compounds, (d) organic peroxides, (e) thio compounds, (f) hexaarylbiimidazole compounds, (g) ketoxime ester compounds, (h) borate compounds, (i) azinium compounds, (j) metallocene compounds, (k) active ester compounds, (1) compounds containing a carbon-halogen bond, and (m) alkylamine compounds.

The radical polymerization initiator may be used singly or in combination thereof in the present invention. It is preferable to use a combination of two or more kinds of the radical polymerization initiators from the viewpoint of effective initiation.

The (B) radical polymerization initiator of the present invention is preferably used in a range of from 0.01 to 35% by mass, more preferably from 0.1 to 30% by mass, and still more preferably from 0.5 to 30% by mass, based on the total amount of the (A) compound represented by the Formula (1), or based on the total amount of the (A) compound represented by the Formula (1) and (D) another polymerizable compound which is an optional component as described later.

Moreover, the (B) radical polymerization initiator is suitably contained so that a mass ratio of [polymerization initiator] : [sensitizing dye] is the range of from 200:1 to 1:200, preferably 50:1 to 1:50, and more preferably 20:1 to 1:5, based on the (E) sensitizing dye which may be used if needed as mentioned later.

### (C) Colorant

The ink composition for inkjet-recording of the present invention may be a transparent ink and thus is not essential to be used colorants to form a colored image. However, when the ink composition of the present invention is used to form a colored image, the ink composition may contain at least one (C) colorant.

While the colorant usable in the composition of the present invention is not particularly limited, the colorant may be arbitrarily selected from known colorants such as pigments, oil-soluble dyes, water-soluble dyes, or disperse dyes. Among them, pigments and oil-soluble dyes are preferable due to their resistance against weathering as well as color reproducibility, and pigments are more preferable.

The suitable colorant for the ink composition or the inkjet recording ink composition of the present invention is preferably a compound which does not function as a polymerization inhibitor in the polymerization reaction which is the curing reaction, from the viewpoint that the sensitivity to the curing reaction with active rays is not lowered.

### - Pigment -

The pigment for use in the present invention is not particularly limited, and examples thereof include organic or inorganic pigments having the following Color Index Numbers.

As for red or magenta pigments, the pigment includes, for example, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36.

As for blue or cyan pigments, the pigment includes, for example, Pigment Blue 1, 15, 15:1, 15:2, 15:3,15:4, 15:6, 16,17-1, 22, 27,28,29, 36, and 60.

As for green pigments, the pigment includes, for example, Pigment Green 7, 26, 36, and 50.

As for yellow pigments, the pigment includes, for example, Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, and 193.

As for black pigments, the pigment includes, for example, Pigment Black 7, 28, and 26.

As for white pigments, the pigment includes, for example, Pigment White 6, 18, and 21.

These pigments may be used according to the purpose of its use.

### - Oil-soluble dye -

Hereinafter, the oil-soluble dye usable in the present invention will be described.

The oil-soluble dye usable in the present invention means a dye that is substantially insoluble in water. Specifically, the oil-soluble dye has a solubility in water at 25°C (the mass of the dye soluble in 100 g of water) of 1 g or less, preferably 0.5 g or less, and more preferably 0.1 g or less. Thus, the oil-soluble dye means a so-called water-insoluble pigment or an oil-soluble colorant, and among them, an oil-soluble colorant is preferable.

Among the oil-soluble dyes usable in the present invention, any yellow dyes may be used. Examples thereof include: aryl- or heteryl-azo dyes having a coupling component such as phenols, naphthols, anilines, pyrazolones, pyridones, or open-chain active methylenes compound; azomethine dyes having a coupling component such as open-chain active methylenes compound; methine dyes such as benzylidene dyes or monomethine oxonol dyes; quinone dyes such as naphthoquinone dyes or anthraquinone dyes; as well as quinophthalone dyes, nitro/nitroso dyes, acridine dyes, and acridinone dyes.

Among the oil-soluble dyes usable in the present invention, any magenta dyes may be used. Examples thereof include: aryl- or heteryl-azo dyes having a coupling component such as phenols, naphthols, or anilines; azomethine dyes having a coupling component such as pyrazolones or pyrazolotriazoles; methine dyes such as arylidene dyes, styryl dyes, merocyanine dyes, or oxonol dyes; carbonium dyes such as diphenylmethane dyes, triphenylmethane dyes, or xanthene dyes; quinone dyes such as naphthoquinones, anthraquinones, or anthrapyridones; and fused polycyclic dyes such as dioxazine dyes.

Among the oil-soluble dyes usable in the present invention, any cyan dyes may be used. Examples thereof include azomethine dyes such as indoaniline dyes, indophenol dyes, or dyes having a pyrrolotriazole as the coupling component; polymethine dyes such as cyanine dyes, oxonol dyes, or merocyanine dyes; carbonium dyes such as diphenylmethane dyes, triphenylmethane dyes, or xanthene dyes; phthalocyanine dyes; anthraquinone dyes; aryl- or heteryl-azo dyes having a coupling component such as phenols, naphthols, or anilines; and indigo/thioindigo dyes.

The dye may exhibit a color (yellow, magenta, or cyan) only after the dissociation of a part of its chromophore. The counter cation at the time of such dissociation may be an inorganic cation such as an alkali metal or an ammonium, or an organic cation such as a pyridinium or a quaternary ammonium salt; or a polymeric cation having, as a partial structure, a cation selected from those described above.

Preferable specific examples thereof include, but are not limited to: C.I. Solvent Black 3, 7, 27, 29 and 34; C.I. Solvent Yellow 14, 16, 19, 29, 30, 56, 82, 93 and 162; C.I. Solvent Red 1, 3, 8, 18, 24, 27, 43, 49, 51, 72, 73, 109, 122, 132 and 218; C.I. Solvent Violet 3; C.I. Solvent Blue 2, 11, 25, 35, 38, 67 and 70; C.I. Solvent Green 3 and 7; and C.I. Solvent Orange 2.

Particularly preferable among them are NUBIAN BLACK PC-0850, OIL BLACK HBB, OIL YELLOW 129, OIL YELLOW 105, OIL PINK 312, OIL RED 5B, OIL SCARLET 308, VALI FAST BLUE 2606, and OIL BLUE BOS (trade names, manufactured by Orient Chemical Industries); AIZEN SPILON BLUE GNH (trade names, manufactured by Hodogaya Chemical Co., Ltd.); NEOPEN YELLOW 075, NEOPEN MAZENTA SE1378, NEOPEN BLUE 808, NEOPEN BLUE FF4012, and NEOPEN CYAN FF4238 (trade names, manufactured by BASF).

### - Disperse dye -

In the present invention, a disperse dye may also be additionally used in such a range of an amount that the disperse dye is soluble in a water-immiscible organic solvent. The disperse dye generally includes a water-soluble dye, but it is used preferably within a range such that the disperse dye is soluble in a water-immiscible organic solvent.

Preferable specific examples thereof include C.I. Disperse Yellow 5, 42, 54, 64, 79, 82, 83, 93, 99, 100, 119, 122, 124, 126, 160, 184:1, 186, 198, 199, 201, 204, 224 and 237; C.I. Disperse Orange 13, 29, 31:1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365 and 368; and C.I. Disperse Green 6:1 and 9.

After being added to the ink composition or the ink composition for inkjet recording according to the present invention, the colorant for use in the present invention is preferably dispersed in the ink to a suitable degree. Various dispersing machines, such as ball mills, sand mills, attritors, roll mills, agitators, Henschel mixers, colloid mills, ultrasonic wave homogenizers, pearl mills, wet jet mills, or paint shakers, may be used for dispersion of the colorant.

Further, a dispersant may be added in dispersing the colorant. The kind of the dispersant is not particularly limited, and such dispersant is preferably a polymer dispersant. The polymer dispersant may be selected, for example from SOLSPERSE series products manufactured by Zeneca. A synergist suitable for various pigments may be used as a dispersion aid. In the present invention, the dispersant and the dispersion aid are added preferably in an amount of 1 to 50 parts by mass with respect to 100 parts by mass of the colorant.

The colorant may be directly added to the inkjet composition together with other components. Alternatively, the colorant may be, in advance, added and uniformly dispersed to or dissolved in a solvent or a dispersing medium such as a compound represented by the Formula (1) of the present invention or the other additional polymerizable compound which is used if desired, followed by incorporation.

In the present invention, the colorant is preferably incorporated by being added in advance to any one or a mixture of two or more of the compound(s) represented by the Formula (1) in view of the prevention of the occurrence of problems such as the deterioration in solvent resistance caused by the remaining solvent in the cured image and VOCs (volatile organic compounds) caused by the residual solvent.

In the case where two or more kinds of polymerizable compounds including the compound represented by the Formula (1), taking into consideration of dispersion efficiency only, it is preferable to add in advance the colorant to a monomer with a lowest viscosity.

These colorants may be suitably selected and used singly or in combination of two or more thereof depending on a utilization purpose of the ink composition.

In the case where a colorant, such as pigments, which exists in a form of a solid material in the ink composition is used in the present invention, the average diameter of the particles of the colorant is preferably set in the range of from 0.005 to 0.5 µm, more preferably in the range of from 0.01 to 0.45 µm, and still more preferably in the range of from 0.015 to 0.4 µm by selection of the colorant, the dispersant, the dispersion medium, the dispersing conditions, and the filtration conditions. By controlling the particle diameter, it becomes possible to prevent clogging in head nozzles and to maintain storage stability, transparency, and curing sensitivity of the inkjet composition.

While the content of the colorant in the ink composition of the present invention is appropriately selected in accordance with utilization purposes, in consideration of physical properties and coloring property, it is generally preferably from 1 to 10% by mass, more preferably from 2 to 8% by mass, based on the entire mass of the ink composition.

The ink composition according to the present invention may further contain other components in addition to the above required components so as to improve the physical properties or the like as long as they do not impair the effects of the present invention.

Explanations regarding these other arbitrary components will be made hereinafter.

### (D) Another polymerizable compound

In addition to the (A) compound(s) represented by the Formula (1), the ink composition according to the present invention may further contain preferably (D) another polymerizable compound. Examples of such polymerizable compound that may be used in combination include radical polymerizable compounds and cationic polymerizable compounds. The (D) another polymerizable compound may be appropriately selected and used in connection with desired characteristics or the (B) radical polymerization initiator.

In the present invention, the total content of the polymerizable compound, namely the total content of the (A) compound represented by the Formula (1) and the (D) another polymerizable compound is in the range of from 45 to 95% by mass, and preferably in the range of from 50 to 90% by mass on the basis of the mass of the total content of the ink composition.

In the case where the compound represented by the Formula (1) is a monofunctional compound, (a compound having one polymerizable double bond in the molecule), the compound represented by the Formula (1) is contained in the composition in an amount of preferably from 10 to 60% by mass, more preferably from 15 to 50% by mass, and still more preferably from 25 to 35% by mass, relative to the total content of the polymerizable compound contained in the ink composition (namely, relative to the total content of the (A) compound represented by the Formula (1) and the (D) another polymerizable component).

In the case where the compound represented by the Formula (1) is a bifunctional compound (a compound having two polymerizable double bonds in the molecule), the compound represented by the Formula (1) is contained in the composition of the present invention in an amount of preferably from 3 to 30% by mass, more preferably from 3 to 20% by mass, and still more preferably from 3 to 10% by mass, relative to the total content as mentioned above of the polymerizable compound contained in the ink composition.

Explanations regarding other polymerizable compounds which are applicable in the present invention will be hereinafter given.

The radical-polymerizable compound is a compound having a radical-polymerizable ethylenic unsaturated bond, and may be any compound as long as it has at least one radical-polymerizable ethylenic unsaturated bond in the molecule. The chemical form of the compound may be a monomer, oligomer, polymer, or the like. The radical-polymerizable compound may be used singly or in combination of two or more thereof with an arbitrary mixing ratio for improving desired properties. It is preferable that two or more radical-polymerizable compounds are used in combination in view of controlling the performances such as reactivity and physical properties.

Examples of the radical-polymerizable compound having a radical-polymerizable ethylenic unsaturated bond include: unsaturated carboxylic acids such as acrylic acid, methacrylic acid, itaconic acid, crotonic acid, isocrotonic acid or maleic acid and salts thereof; anhydrides thereof; acrylonitrile; styrene; various unsaturated polyesters; unsaturated polyethers; unsaturated polyamides; or unsaturated urethanes.

Specific examples thereof include acrylic acid derivatives such as 2-hydroxyethyl acrylate, butoxyethyl acrylate, tridecyl acrylate, carbitol acrylate, cyclohexyl acrylate, tetrahydrofurfuryl acrylate, benzyl acrylate, 2-phenoxyethyl acrylate, bis(4-acryloyloxypolyethoxyphenyl)propane (those having a weight-average molecular weight exceeding 360), polyethylene glycol diacrylate (those having a weight-average molecular weight exceeding 360), polypropylene glycol diacrylate (those having a weight-average molecular weight exceeding 360), dipentaerythritol tetraacrylate, trimethylolpropane triacrylate, oligoester acrylate, N-methylol acrylamide, diacetone acrylamide, epoxyacrylate, isobornyl acrylate, dicyclopentenyl acrylate or dicyclopentenyloxyethyl acrylate; methacrylic acid derivatives such as methyl methacrylate, n-butyl methacrylate, allyl methacrylate, glycidyl methacrylate, benzyl methacrylate, dimethylaminomethyl methacrylate, polyethylene glycol dimethacrylate (those having a weight-average molecular weight exceeding 360), polypropylene glycol dimethacrylate (those having a weight-average molecular weight exceeding 360), or 2,2-bis(4-methacryloxy polyethoxyphenyl)propane (those having a weight-average molecular weight exceeding 360); and other allyl compounds such as allyl glycidyl ether, diallyl phthalate, or triallyl trimellitate.

More specifically, radical polymerizable or crosslinkable monomers, oligomers and polymers commercially available or known in the art are also usable, such as those described in Shinzo Yamashita Ed., "Crosslinking Agent Handbook", (1981, Taisei Publishing); Kiyoshi Kato Ed., "UV-EB Curing Handbook (Raw Material)" (1985, Kobunshi Kankokai); RadTech Japan Ed., "Application and Market of UV-EB Curing Technology", p. 79, (1989, CMC); and Eiichiro Takiyama, "Polyester Resin Handbook", (1988, Nikkankogyo Shimbun).

Examples of the radical-polymerizable compound which may be used in the present invention further include photo-curing polymerizable compounds used in the photopolymerizable compositions described in JP-A No. 7-159983, Japanese Patent Application Publication (JP-B) No. 7-31399, JP-A Nos. 8-224982, 10-863, and 9-134011, and Japanese Patent Application National Publication (Laid Open) No. 2004-514014.

Preferable examples of the radical-polymerizable compound further include a vinyl ether compound. Specific examples thereof include monovinyl, divinyl or trivinyl ether compounds such as ethylene glycol divinyl ether, ethylene glycol monovinyl ether, diethylene glycol divinyl ether, triethylene glycol monovinyl ether, triethylene glycol divinyl ether, propylene glycol divinyl ether, dipropylene glycol diacrylate, dipropylene glycol divinyl ether, butanediol divinyl ether, hexanediol divinyl ether, cyclohexane dimethanol divinyl ether, hydroxyeyhyl monovinyl ether, hydroxynonyl monovinyl ether, or trimethylolpropane trivinyl ether; monovinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-O-propylene carbonate, dodecyl vinyl ether, diethylene glycol monovinyl ether, or octadecyl vinyl ether.

Among these vinyl ether compounds, from the standpoint of curability, adhesion property, and surface hardness, divinyl ether compounds and trivinyl ether compounds are preferable, and divinyl ether compounds are particularly preferable. The vinyl ether compounds may be used singly or in an appropriate combination of two or more thereof.

Examples of the another polymerizable compound further include (meth)acrylic acid esters such as a (meth)acrylic monomer (hereinafter arbitrarily called as an acrylate compound), a (meth)acrylic prepolymer, an epoxy monomer, an epoxy prepolymer, an urethane monomer, or an urethane prepolymer (hereinafter arbitrarily called as an acrylate compound). Specific examples of such another polymerizable compound include compounds described below.

Namely, specific examples of the acrylate compound include 2-ethylhexyl-diglycol acrylate, 2-hydroxy-3-phenoxypropyl acrylate, 2-hydroxybutyl acrylate, hydroxypivalic acid neopentylglycol diacrylate, 2-acryloyloxyethyl phthalic acid, methoxy-polyethylene glycol acrylate, tetramethylolmethane triacrylate, 2-acryloyloxyethyl-2-hydroxyethyl phthalic acid, dimethyloltricyclodecane diacrylate, ethoxylated phenyl acrylate, 2-acryloyloxyethyl succinic acid, nonylphenol EO adduct acrylate, modified glycerin triacrylate, bisphenol A diglycidyl ether acrylic acid adduct, modified bisphenol A diacrylate, phenoxy-polyethylene glycol acrylate, 2-acryloyloxyethylhexahydrophthalic acid, bisphenol A PO adduct diacrylate, bisphenol A EO adduct diacrylate, dipentaerythritol hexaacrylate, pentaerythritol triacrylate tolylene diisocyanate urethane prepolymer, lactone-modified flexible acrylate, butoxyethyl acrylate, propylene glycol diglycidyl ether acrylic acid adduct, pentaerythritol triacrylate hexamethylenediisocyanate urethane prepolymer, 2-hydroxyethyl acrylate, methoxydipropylene glycol acrylate, ditrimethylolpropane tetracrylate, pentaerythritol triacrylate hexamethylene diisocyanate urethane prepolymer, stearyl acrylate, isoamyl acrylate, isomyristyl acrylate, isostearyl acrylate, lactone-modified acrylate, and N-vinylcaprolactam.

These acrylate compounds are preferable since they are polymerizable compounds conventionally used in UV curable inks as they are less irritative or less sensitizing to skin (having small inductivity of rashes on the skin), and may provide a stable ink-ejecting property with a relatively low viscosity as well as a good polymerization sensitivity and a good adhesion to a recording medium.

Even though these monomers described as the (D) other polymerizable compounds have a low molecular weight, each of them has a low sensitizing property to skin, a high reactivity, a low viscosity, and an excellent adhesion to the recording medium.

From the viewpoint of improving sensitivity, resistance to bleeding, and adhesion property to recording media, a preferable embodiment is such that a combination of the monoacrylate, as a component of the (D) another polymerizable compound, and either a polyfunctional acrylate monomer or oligomer having a molecular weight of 400 or more (preferably 500 or more) is used.

It is particularly preferable to use a combination of a monoacrylate monomer selected from the above, a component selected from the (A) compound represented by the Formula (1), and either the polyfunctional acrylate monomer or the polyfunctional acrylate oligomer selected from the (D) components in an ink composition used for recording to flexible recording media such as PET films or PP films, because such a combination may further improve the adhesion to recording media by providing flexibility to a film formed by the ink composition while increasing a strength of the film.

A preferable embodiment of the present invention uses a combination of at least three kinds of polymerizable compound namely, a monofunctional monomer, a bifunctional monomer, and a polyfunctional monomer because such a combination provides improvements in the sensitivity, resistance to bleeding, and adhesiveness to recording media while securing safety.

The monoacrylate is preferably stearyl acrylate, isoamyl acrylate, isomyristyl acrylate, or isostearyl acrylate, because they provide high sensitivity and low shrinking property to prevent curling, as well as preventing bleeding and odor of printed materials and reduction of cost of an irradiation apparatus.

The oligomer which may be used in combination with the monoacrylate includes especially preferably an epoxy acrylate oligomer and an urethane acrylate oligomer. In addition, the methacrylate shows a lower irritant property to the skin than the acrylate.

Among the above compounds, a case where the amount used of an alkoxy acrylate is 70% by mass or less and the remainder is the amount of an acrylate is preferable, because it has good properties in sensitivity, resistance to bleeding, and odor.

In the present invention, when any one of the acrylate compounds as described above is used as the (D) another polymerizable compound, an amount of the acrylate compound is preferably 30% by mass or more, more preferably 40% by mass or more, and still more preferably 50% by mass or more, based on the total mass of the other polymerizable compound(s) (i.e. the total amount of (D) component ). Further, all of the (D) other polymerizable compounds to be simultaneously used may be selected from among the acrylate compounds mentioned above.

The selection of the polymerization initiator and the polymerizable compound in the present invention may be done in accordance with various purposes (e.g. as means for the prevention of the deterioration in sensitivity caused by the light-shielding effect of the colorant used in the ink composition). For example, the ink composition may contain a combination of the radical polymerizable compound and the radical polymerization initiator. Alternatively, the ink composition may be formed as a radical-cation hybrid curable ink using both of the combination of the radical polymerizable compound and the radical polymerization initiator and a combination of a cation-polymerizable compound and a cation polymerization initiator.

The cationic polymerizable compound for use in the present invention is required to initiate polymerization reaction in the presence of the acid generated by an agent that optically generates acid and to cure, and otherwise there is no particular limit thereto. The cationic polymerizable compound may be any of cationic polymerizable monomers known as photo-cationic polymerizable monomers. Examples of the cationic polymerizable monomers include epoxy compounds, vinyl ether compounds, and oxetane compounds described in JP-A Nos. 6-9714, 2001-31892, 2001-40068, 2001-55507, 2001-310938, 2001-310937, 2001-220526 and the like.

Moreover, cationic polymerizable compounds contained in a cationic polymerizable, photocurable resin are also known. In recent years, polymerizable compounds contained in photocationic polymerizable photocurable resins sensitized to visible light within the wavelength region of 400 nm or more are disclosed in JP-A Nos. 6-43633, 8-324137 and the like. These may also be used in the ink composition of the present invention.

Examples of a cationic polymerization initiator (photolytically acid-generating agent) to be usable in combination with the cationically polymerizable compound include a chemically amplified photo resist or a compound used for light cationic polymerization (Japanese Research Association for Organic Electronics Materials Ed., "Organic Materials for Imaging" (published by Bun-Shin Shuppan (1993), pp. 187 to 192). Preferable examples of the cationic polymerization initiators used in the present invention will be described below.

Firstly, B(C₆F₅)₄⁻ salts, PF₆⁻ salts, AsF₆⁻ salts, SbF₆⁻ salts, or CF₃SO₃⁻ salts of aromatic onium compound such as diazonium, ammonium, iodonium, sulfonium, or phosphonium may be mentioned. Secondly, a sulfone compound which generates a sulfonic acid may be mentioned. Thirdly, a halogenide which generates hydrogen halide may also be used. Fourthly, an iron allene complex may be mentioned.

These cationic polymerization initiators may be used singly or in combination thereof.

### (E) Sensitizing Dye

The ink composition according to the present invention may contain (E) a sensitizing dye in order to promote degradation of the (B) radical polymerization initiator caused by irradiation of active ray. The sensitizing dye absorbs a specific active radiation to take an electronically excited state. The sensitizing dye in the electronically excited state contacts the polymerization initiator to cause electron transfer, energy transfer, heat generation, or the like. As a result, the polymerization initiator undergoes a chemical change to be decomposed, thereby generating radical, acid, or base.

Compounds which are adapted to a wavelength of active radiation which causes generation of a polymerization starter in the (B) polymerization initiator and used for the ink composition may be used as the sensitizing dye. In consideration of the application for curing reactions of general ink compositions, preferable examples of the sensitizing dye of the present invention include the dyes belonging to the compound groups listed below as well as having an absorption wavelength in the wavelength range of from 350 to 450 nm.

Typical examples thereof include polynuclear aromatic compounds (e.g., anthracene, pyrene, perylene, and triphenylene), thioxanthones (e.g., isopropyl thioxanthone), xanthenes (e.g., fluorescein, eosin, erythrocin, rhodamine B, and rose bengal), cyanines (e.g., thiacarbocyanine and oxacarbocyanine), merocyanines (e.g., merocyanine and carbomerocyanine), thiazines (e.g., thionine, methylene blue, and toluidine blue), acridines (e.g., acridine orange, chloroflavine, and acriflavine), anthraquinones (e.g., anthraquinone), squaryliums (e.g., squarylium), coumarins (e.g., 7-diethylamino-4-methylcoumarin) and the like. Preferable examples thereof include polynuclear aromatic compounds and thioxanthones.

More preferable examples of the sensitizing dye include the compounds represented by any one of the following Formulae (IV) to (VIII).

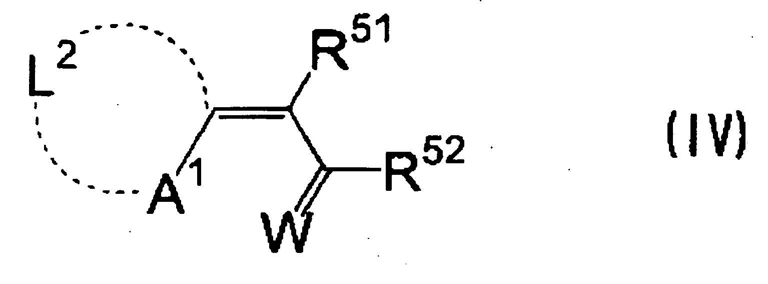

In the Formula (I), A¹ represents a sulfur atom or NR⁵⁰; R⁵⁰ represents an alkyl group or an aryl group; L² represents a non-metallic atomic group which forms a base nucleus of the sensitizing dye together with the adjacent A¹ and the adjacent carbon atom; R⁵¹ and R⁵² each independently represent a hydrogen atom or a monovalent non-metallic atomic group, and R⁵¹ and R⁵² may be bonded with each other to form an acid nucleus of the sensitizing dye; and W represents an oxygen atom or a sulfur atom.

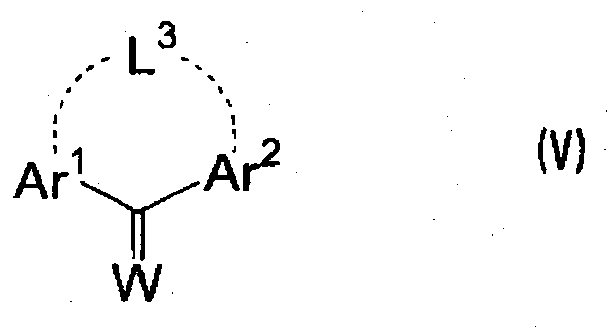

In the Formula (V), Ar¹ and A² each independently represent an aryl group, and Ar¹ and A² are linked via the bonds from L³; L³ represents -O- or -S-; and W is the same as defined for the Formula (IV).

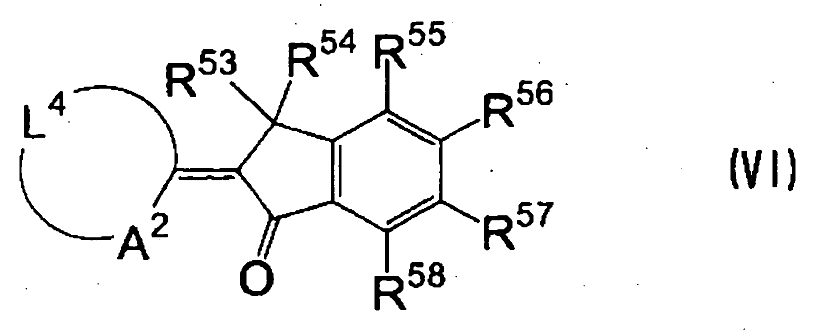

In the Formula (VI), A² represents a sulfur atom or NR⁵⁹; L⁴ represents a non-metallic atomic group which forms a base nucleus of the sensitizing dye together with the adjacent A² and the adjacent carbon atom; and R⁵³, R⁵⁴, R⁵⁵, R⁵⁶, R⁵⁷ and R⁵⁸ each independently represent a monovalent non-metallic atomic group; and R⁵⁹ represents an alkyl group or an aryl group.

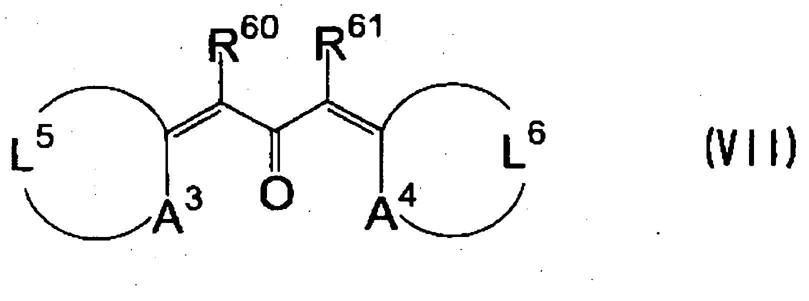

In the Formula (VII), Ar³ and A⁴ each independently represent -S-, -NR⁶²- or -NR⁶³-; R⁶² and R⁶³ each independently represent a substituted or unsubstituted alkyl group or a substituted or unsubstituted aryl group; L⁵ and L⁶ each independently represent a non-metallic atomic group which forms a base nucleus of the sensitizing dye together with the adjacent A³ or A⁴ and the adjacent carbon atom; and R⁶⁰ and R⁶¹ each independently represent a hydrogen atom or a monovalent non-metallic atomic group; R⁶⁰ and R⁶¹ may be linked with each other to form an aliphatic ring or an aromatic ring.

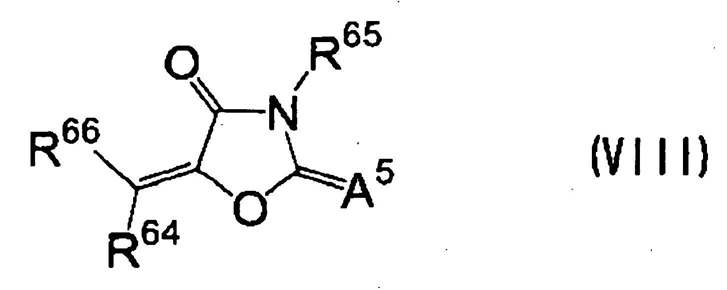

In the Formula (VIII), R⁶⁶ represents an a aromatic ring which arbitrarily has a substituent, or a hetero ring which arbitrarily has a substituent; A⁵ represents an oxygen atom, a sulfur atom or =NR⁶⁷; and R⁶⁴, R⁶⁵ and R⁶⁷ each independently represent a hydrogen atom or a monovalent non-metallic atomic group, and each of the pair of R⁶⁷ and R⁶⁴ and the pair of R⁶⁵ and R⁶⁷ may be linked with each other to form an aliphatic ring or an aromatic ring.

Specific preferable examples of the compounds represented by any one of the Formulae (IV) to (VIII) are shown below.

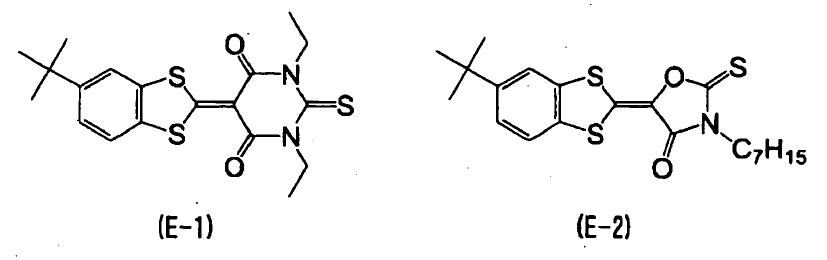

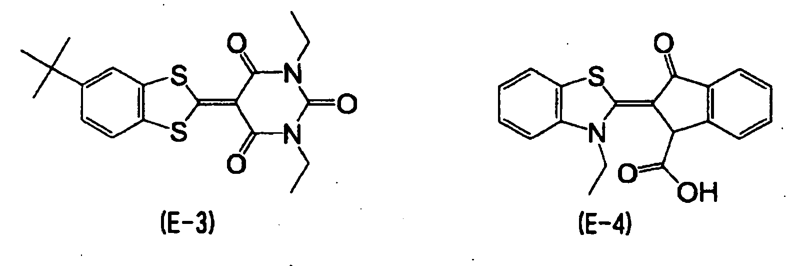

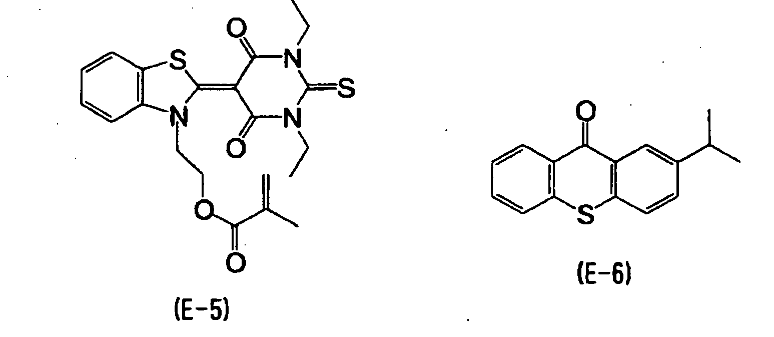

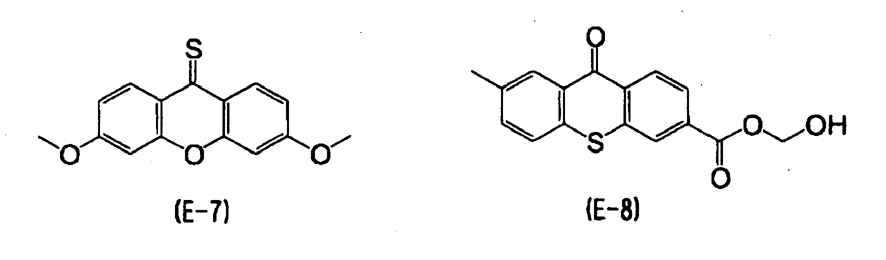

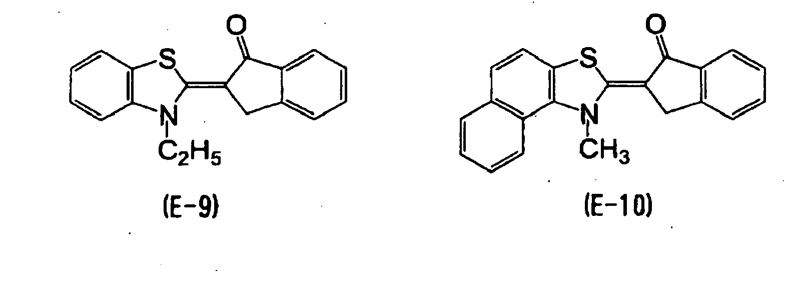

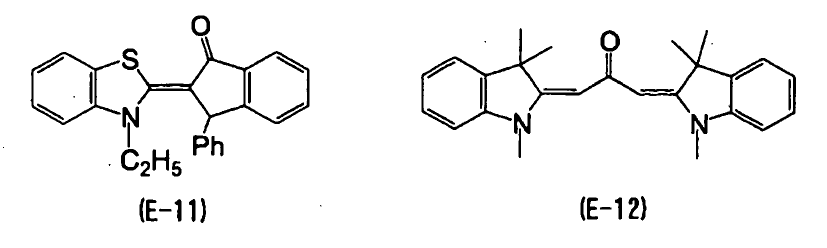

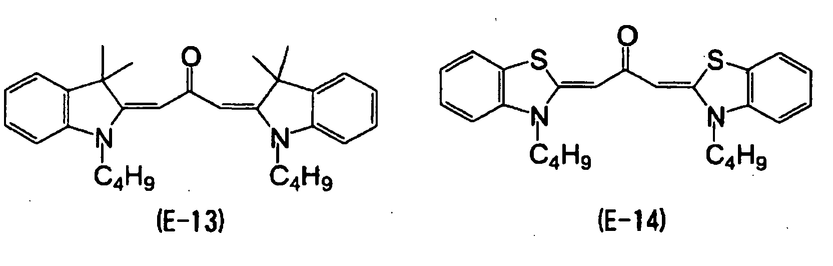

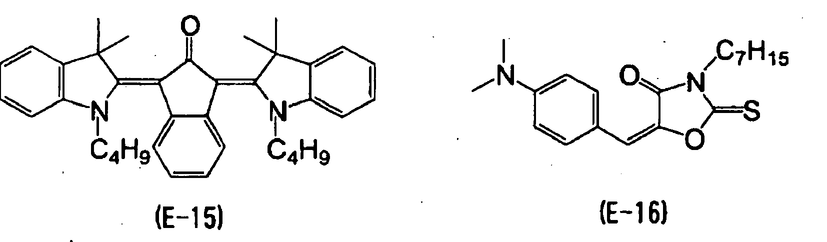

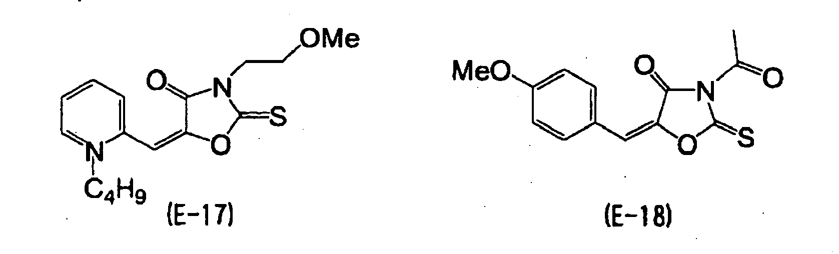

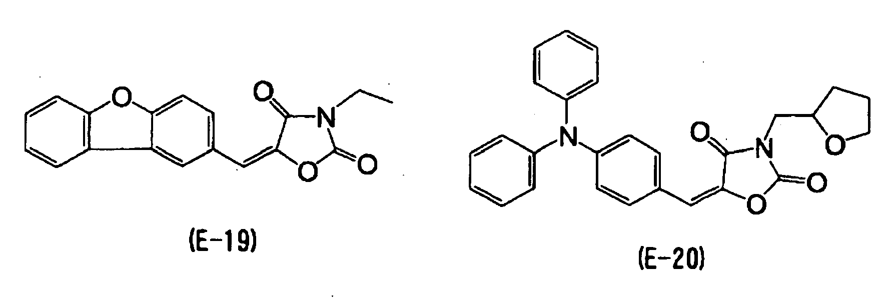

### (F) Cosensitizer

The ink composition according to the present invention may further contain a cosensitizer. The cosensitizer in the present invention has functions of further improving the sensitivity of the sensitizing dye to the active radiation, or suppressing the polymerization inhibition of polymerizable compound by oxygen.

Examples of the cosensitizer include amines such as those described in M. R. Sander et al., "Journal of Polymer Society" vol. 10, p. 3173, (1972), JP-B No. 44-20189, JP-A Nos. 51-82102, 52-134692, 59-138205, 60-84305, 62-18537, and 64-33104 or Research Disclosure 33825; and specific examples thereof include triethanolamine, ethyl p-dimethylaminobenzoate, p-formyldimethylaniline, and p-methylthiodimethylaniline.

Other examples of the cosensitizer include thiols and sulfides, such as thiol compounds described in JP-A No. 53-702, or JP-A No. 5-142772, or disulfide compounds described in JP-A No. 56-75643. Specific examples thereof include 2-mercaptobenzothiazole, 2-mercaptobenzoxazole, 2-mercaptobenzimidazole, 2-mercapto-4(3H)-quinazoline, and β-mercaptonaphthalene.

Further other examples of the cosensitizer include amino acid compounds (e.g., N-phenylglycine), the organic metal compounds described in JP-B No. 48-42965 (e.g., tributyltin acetate), the hydrogen donors described in JP-B No. 55-34414, the sulfur compounds described in JP-A No. 6-308727 (e.g., trithiane), the phosphorus compounds described in JP-A No. 6-250387 (e.g., diethyl phosphite), and the Si-H and Ge-H compounds described in JP-A No. 8-65779.

### (G) Other Components

The ink composition according to the present invention may further contain other components in accordance with necessity. Examples of such additional components include polymerization inhibitors, solvents, and the like.

A polymerization inhibitor may be added to the ink composition for improvement in storability. When the ink composition according to the present invention is applied to inkjet recording, it is preferable to heat the composition to a temperature in the range of 40 to 80°C whereby reducing the viscosity of the ink before ejection; and thus, the addition of a polymerization inhibitor is preferable for the prevention of the head clogging by thermal polymerization. The polymerization inhibitor is preferably added in an amount of from 200 to 20,000 ppm with respect to the total amount of the ink composition according to the present invention. Examples of polymerization inhibitors include hydroquinone, benzoquinone, p-methoxyphenol, TEMPO, TEMPOL, and cupferron A1.

Considering that the ink composition according to the present invention is a radiation-curable ink composition, the composition preferably contains no solvent, so that the reaction occurs immediately after deposition to cure the ink composition. However, the ink composition may contain a predetermined solvent as long as it does not affect the curing speed of ink composition and the like. The solvent may be an organic solvent or water. In particular, an organic solvent may be added for improvement in adhesiveness to the recording medium (support such as paper). Addition of an organic solvent is effective for the prevention of the problem of VOCs.

The amount of the organic solvent is, for example, in the range of from 0.1 to 5 % by mass, preferably in the range of from 0.1 to 3 % by mass, relative to the total mass of the ink composition according to the present invention.

In addition, other known compounds may be added to the ink composition according to the present invention in accordance with necessity. Examples of such additional compounds include a surfactant, a leveling additive, a matting agent, an antifoaming agent, and a resin for adjustment of film physical properties, such as a polyester resin, a polyurethane resin, a vinyl resin, an acrylic resin, a rubber resin, or a wax.

Further, addition of a tackifier that does not inhibit polymerization is also preferable in view of the improvement in adhesiveness to recording media such as polyolefin or PET. Specific examples thereof include the high-molecular weight adhesive polymers described in JP-A No. 2001-49200, pp. 5 to 6 (e.g., copolymers of a (meth)acrylic ester of an alcohol having an alkyl group having 1 to 20 carbon atoms, copolymers of a (meth)acrylic ester of an alicyclic alcohol having 3 to 14 carbon atoms, and copolymers of a (meth)acrylic ester of an aromatic alcohol having 6 to 14 carbon atoms), and low-molecular weight adhesive resins having polymerizable unsaturated bonds.

### [Properties of Ink Composition for Inkjet Recording]

Preferable properties of the ink composition for inkjet recording according to the embodiment of the present invention are herein explained.

Considering the ejection efficiency when applied to inkjet recording, the ink composition for inkjet recording according to the present invention preferably has an ink viscosity of from 7 to 30 mPa·s, more preferably from 7 to 25 mPa·s, at the temperature upon ejection (e.g., a temperature in the range of 40 to 80°C, more preferably in the range of 25 to 50°C). For example, the viscosity at room temperature (25 to 30°C) of the ink composition of the present invention may be preferably from 10 to 50 mPa·s, and more preferably from 12 to 40 mPa·s.

It is preferable to adjust and determine properly the ink composition according to the present invention so that the viscosity falls in the above range. By setting the viscosity at room temperature high, it becomes possible to prevent penetration of the ink into the recording medium even when a porous recording medium is used, thereby to reduce the amount of uncured monomer and the odor, to suppress ink bleeding upon the deposition of ink droplets, and consequently to improve the image quality.

The surface tension of the ink composition for inkjet recording according to the present invention is preferably from 20 to 30 mN/m and more preferably from 23 to 28 mN/m. When the ink is used for recording on various recording media such as polyolefin, PET, coated paper, and non-coated paper, the surface tension is preferably 20 mN/m or more in view of the prevention of bleeding and penetration, and preferably 30 mN/m or less in view of the wettability.

### [Inkjet Recording Method]

Hereinafter, the inkjet recording method according to the present invention and inkjet recording apparatuses applicable thereto will be described.

The inkjet recording method according to the present invention comprises: ejecting the ink composition as an ink for inkjet recording onto a recording medium (support, recording medium, etc.); and curing the ejected ink composition for inkjet recording by irradiation with active radiation, thereby to form an image.

That is, the inkjet recording method according to the present invention is characterized by:
(i-1) a process of ejecting the ink composition as an ink for inkjet recording onto a recording medium; and
(i-2) a process of curing the ejected ink composition by irradiation with active radiation.

The inkjet recording method of the present invention forms an image by curing the ink composition on the recording medium by including the processes of (i-1) and (i-2).

The process (i-1) in the recording method of the present invention may utilize the inkjet recording apparatus that will be hereinafter explained in detail.

### -Inkjet Recording Apparatus-

The inkjet recording apparatus for use of inkjet-recording methods in the present invention is not particularly limited, and may be selected properly from known available inkjet recording apparatuses with sufficient resolution to achieve purposes. That is, ejection of the ink composition onto the recording media in the process (i-1) of the present invention may be performed by any known inkjet recording apparatuses including commercially available ones.

Examples of usable inkjet recording apparatuses in the present invention include an apparatus which has an ink-supplying system, a temperature sensor, and an active radiation source.

The ink-supplying system includes, for example, a stock tank storing the ink composition according to the present invention, a supply pipe, an ink-supplying tank immediately before inkjet head, a filter, and a piezoelectric inkjet head. The piezoelectric inkjet head may be operated so that the resolution is in a range of, for example, from 320x320 to 4,000x4,000 dpi, preferably in a range of from 400x400 to 1,600×1,600 dpi, and more preferably in a range of 720x720 dpi, with multi-sized dots in an amount in the range of 1 to 100 pl, which is preferably in a range of from 8 to 30 pl. The unit "dpi" in the present invention means the number of dots per 2.54 cm.

As described above, the temperature of the ink composition of the present invention, which is a radiation-curable ink, during ejecting is preferably maintained constant. Therefore, the region from the ink-supplying tank to the inkjet head is preferably thermally insulated and heated. The method of controlling the temperature is not particularly limited, and is preferable such that each piping unit is monitored by multiple temperature sensors and is heated to control the temperature adequately based on the flow rate of ink and the environmental temperature. The temperature sensors may be disposed in the ink-supplying tank and near the nozzles of the inkjet head. In addition, the head unit to be heated is preferably thermally shielded or insulated so as to minimize the environmental influence of temperature on the apparatus. It is preferable to insulate the head unit from other units and reduce the heat capacity of the entire unit to be heated in order to shorten the start-up time needed for heating or in order to reduce the loss in heat energy.

When the ink composition for inkjet recording according to the present invention is ejected, it is preferable to lower the viscosity of the ink composition to a range of from 7 to 30 mPa·s, more preferably from 7 to 25 mPa·s, by heating the ink composition to a preferable range of from 40 to 80°C, more preferably from 25 to 50°C, before ejection. Especially as the ink composition according to the present invention, it is preferable to use an ink composition whose ink viscosity at 25°C is in the range of from 35 to 500 mP·s, because significant effects are obtained. In this manner, it is possible to realize highly stable ejection.

Generally, radiation-curable ink compositions, such as the ink composition according to the present invention, are usually more viscous than aqueous inks used for inkjet recording. Therefore, the fluctuation in the viscosity of radiation-curable ink compositions caused by the fluctuation in temperature during ejecting is larger than one of aqueous inks. The fluctuation in the viscosity of ink composition exerts significant influences on the droplet size and the droplet ejection speed, causing deterioration in image quality. Accordingly, it is necessary to keep the temperature of the ink composition as constant as possible during ejecting. It is preferable to control the ink composition temperature within ±5°C from the set temperature, more preferably ±2°C from the set temperature, and still more preferably ±1°C from the set temperature in the present invention.

The process (i-2) of curing the ejected ink composition by irradiation with active radiation is hereinafter explained.

The ink composition ejected on the surface of a recording medium is cured by irradiation with active radiation. This is because the (B) polymerization initiator contained in the ink composition according to the present invention is decomposed by irradiation of active radiation to generate a polymerization starter such as a radical, and the polymerization starter causes and promotes radical polymerization of the (A) compound represented by the Formula (1), which may further be copolymerized with the (D) other additional polymerizable compound which are used in combination in accordance with necessity. In a case where a (E) sensitizing dye coexists in the ink composition with the (B) polymerization initiator, the (E) sensitizing dye in the polymerization initiation system is excited to the excited state by absorption of active radiation, and then the (A) polymerization initiator is promoted to decomposing upon contact with the (B) radical polymerization initiator, to achieve curing of the ink composition with high sensitivity.

Examples of the active radiation include α-rays, γ -rays, electron beams, X-rays, ultraviolet rays, visible rays, and infrared rays. Especially, electron beams, ultraviolet rays or visible rays are preferable as the active radiation. The peak wavelength of the active radiation depends on the absorption characteristics of the sensitizing dye in the ink composition, and it may be, for example, in a range of from 200 to 600 nm, preferably in a range of from 300 to 450 nm, and more preferably in a range of from 350 to 420 nm.

A polymerization initiating system in the present invention is sufficiently sensitive to radiation even at a low output. Accordingly, output of the active radiation may be, for example, an irradiation energy of 2,000 mJ/cm² or lower, preferably from 10 to 2,000 mJ/cm², more preferably from 20 to 1,000 mJ/cm², and especially preferably from 50 to 800 mJ/cm².

The active radiation may be irradiated such that the illuminance on the exposure plane is, for example, in a range of from 10 to 2,000 mW/cm², and preferably in a range of from 20 to 1,000 mW/cm².

Mercury lamps, gas or solid state lasers and the like are widely used as active radiation ray sources, and mercury lamps and metal halide lamps are widely used for curing the ink composition for UV-curing inkjet-recording. However, under the current strong needs for the elimination of the use of mercury from the viewpoint of environmental protection, it is very important industrially and environmentally to replace mercury lamps with GaN-type semiconductor UV-emitting devices. In addition, LEDs (UV-LED) and LDs (UV-LD) are smaller in size, longer in lifetime, higher in efficiency, and lower in cost, and thus, attracting attention as light sources for radiation-curing inkjet recording.

A light-emitting diode (LED) and a laser diode (LD) may also be used as the active radiation ray source. In particular, an ultraviolet LED or an ultraviolet LD may be used when an ultraviolet ray source is required. For example, a purple LED having a main emission spectrum in the wavelength range of 365 to 420 nm is available from Nichia Corporation. As to a light having a still shorter wavelength, U.S. Patent No. 6,084,250 discloses an LED having a main emission spectrum in the wavelength region of from 300 to 370 nm. Other ultraviolet LEDs are also commercially available, and capable of emitting radiations of different UV ranges. The radiation ray source used in the present invention is preferably a UV-LED, and particularly preferably a UV-LED having a peak wavelength in the range of from 350 to 420 nm.

The maximum illuminance of LED light on the image recording medium is preferably from 10 to 2000 mW/cm², more preferably from 20 to 1000 mW/cm², and especially preferably from 50 to 800 mW/cm².

The ink composition according to the present invention may be irradiated with active radiation, for example, for 0.01 to 120 seconds, preferably for 0.1 to 90 seconds.

The irradiation condition and the basic irradiation method with the active radiation are disclosed in JP-A No. 60-132767. Specifically, the exposure is performed in a so-called shuttle process, i.e., by scanning with a head unit and light sources, in which the head unit means including an ink-ejecting device, and the light sources are disposed at both sides of the head unit. The active radiation is irradiated after ink deposition following passing a certain period (e.g., from 0.01 to 0.5 second, preferably from 0.01 to 0.3 second, and more preferably from 0.01 to 0.15 second). When the time between ink deposition and irradiation is controlled as very short as possible, it is possible to prevent bleeding of the uncured ink deposited on the recording medium. Further, even when a porous recording medium is used, ink is exposed to radiation before penetrating deep into the recording medium where the radiation does not reach, whereby residual unreacted monomer is reduced to decrease odor.

Moreover, the curing of the ink may be conducted with a light source that is not driven. WO 99/54415 Pamphlet discloses an irradiation method in which the recording area is irradiated with UV rays by using an optical fiber or by using a mirror disposed on a side wall of the head unit which mirror reflects the collimated light. Such curing methods may also be applied in the inkjet recording method of the present invention.

By employing inkjet-recording methods such as described above, the dot diameter of the deposited ink may be maintained constant even when various recording media that are different in surface wettability is used, thus improving the image quality. In order to obtain a color image by the inkjet recording method, it is preferable to form images by in an order in which a color having higher lightness overcoats another color(s) having lower lightness. When color inks are applied in this order, the radiation rays reaches inks located at the bottom; therefore, superior curing sensitivity, reduction in the amount of residual monomer and odor, and improvement in adhesiveness may be expected. Although the irradiation with radiation after a full-color image is formed is made possible, it is preferable to irradiate the image with radiation after each color ink is deposited, in view of the acceleration of curing.

In addition, as mentioned above, since the image formed by using the ink composition in accordance with the present invention is excellent in adhesiveness to the recording medium and flexibility, the ink composition is useful as an ink composition which is generally applicable to manufacturing of the printed matter, as well as a variety of applications such as image formation being carried out on a flexible resin film and use of the film for attaching onto a curved surface without any damage occurrence in the image.

### EXAMPLES

Hereinafter, the present invention will be described in detail with reference to examples, while the present invention is by no way limited thereby. The examples described below relate to each of plural colors of inks for UV inkjet. "Parts" in the Examples all mean "parts by mass" unless otherwise specifically stated.

### [Example 1]

### <Preparation of Ink Composition>

### (Yellow Ink Composition)

• Compound represented by the Formula (1)
   [Exemplified compound (1)] 22.0 parts
• N-Vinylcaprolactam 16.0 parts
• 2-Phenoxyethyl acrylate
   (SR339, manufactured by Sartomer 21.4 parts
• Trimethylolpropane triacrylate
   (SR351, manufactured by Sartomer Inc.) 3.0 parts
• Dipropylene glycol diacrylate
   (SR508, manufactured by Sartomer Inc.) 1.0 part
• SOLSPERSE 32000
   (Dispersant, manufactured by Noveon Inc.) 0.4 part
• CROMOPHTAL YELLOW LA
   (Pigment, manufactured by Ciba Specialty Chemicals) 3.6 parts
• GENORAD 16
   (Polymerization inhibitor, manufactured by Rahn AG) 0.05 part
• RAPI-CURE DVE-3
   (Vinyl ether compound, manufactured by ISP Europe Ltd.) 2.0 parts
• LUCIRIN TPO
   (Photoinitiator, manufactured by BASF AG) 8.5 parts
• Benzophenone (Photoinitiator) 4.0 parts
• IRGACURE 184
   (Photoinitiator, manufactured by Ciba Specialty Chemicals) 4.0 parts
• Isopropylthioxanthone (ITX) 1.0 part
• Byk 307
   (Antifoaming agent, manufactured by BYK Chemie GmbH) 0.05 part

### (Magenta Ink Composition)

• Compound represented by the Formula (1)
   [Exemplified compound (1)] 20.0 parts
• N-Vinylcaprolactam 15.0 parts
• 2-Phenoxyethyl acrylate
   (SR339, manufactured by Sartomer Inc.) 26.4 parts
• Trimethylolpropane triacrylate
   (SR351, manufactured by Sartomer Inc.) 5.0 parts
• SOLSPERSE 32000
   (Dispersant, manufactured by Noveon Inc.) 0.4 part
•CINQUASIA MAZENTA RT 355D
   (Pigment, manufactured by Ciba Specialty Chemicals) 3.6 parts
• GENORARD 16
   (Polymerization inhibitor, manufactured by Rahn AG) 0.05 part
• RAPI-CURE DVE-3
   (Vinyl ether compound, manufactured by ISP Europe Ltd.) 4.0 parts
• LUCIRIN TPO
   (Photoinitiator, manufactured by BASF AG) 8.5 parts
• Benzophenone (Photoinitiator) 4.0 parts
• IRGACURE 184
   (Photoinitiator, manufactured by Ciba Specialty Chemicals) 4.0 parts
• Isopropylthioxanthone (ITX) 1.0 part
• Byk 307
   (Antifoaming agent, manufactured by BYK Chemie GmbH) 0.05 part

### (Cyan Ink Composition)

• Compound represented by the Formula (1)
   [Exemplified compound (1)] 12.0 parts
• Tridecyl acrylate
   (SR498E, manufactured by Sartomer Inc.) 11.0 parts
• 2-Phenoxyethyl acrylate
   (SR339, manufactured by Sartomer Inc.) 23.4 parts
• N-Vinylcaprolactam 13.0 parts
• Trimethylolpropane triacrylate
   (SR351, manufactured by Sartomer Inc.) 8.0 parts
• SOLSPERSE 32000
   (Dispersant, manufactured by Noveon Inc.) 0.4 part
• IRGALITE BLUE GLVO
   (Pigment, manufactured by Ciba Specialty Chemicals) 3.6 parts
• GENORARD 16
   (Polymerization inhibitor, manufactured by Rahn AG) 0.05 part
• RAPI-CURE DVE-3
   (Vinyl ether compound, manufactured by ISP Europe Ltd.) 4.0 parts
• LUCIRIN TPO
   (Photoinitiator, manufactured by BASF AG) 8.5 parts
• Benzophenone (Photoinitiator) 4.0 parts
• IRGACURE 184
   (Photoinitiator, manufactured by Ciba Specialty Chemicals) 4.0 parts
• Byk 307
   (Antifoaming agent, manufactured by BYK Chemie GmbH) 0.05 part

### (Black Ink Composition)

• Compound represented by the Formula (1)
   [Exemplified compound (1)] 20.0 parts
• Isobornyl acrylate
   (SR506D, manufactured by Sartomer Inc.) 17.0 parts
• 2-Phenoxyethyl acrylate
   (SR339, manufactured by Sartomer Inc.) 28.4 parts
• Trimethylolpropane triacrylate
   (SR351, manufactured by Sartomer Inc.) 6.0 parts
• SOLSPERSE 32000
   (Dispersant, manufactured by Noveon Inc.) 0.4 part
• MICROLITH BLACK C-K
   (Pigment, manufactured by Ciba Specialty Chemicals) 2.6 parts
• GENORAD 16
   (Polymerization inhibitor, manufactured by Rahn AG) 0.05 part
• LUCIRIN TPO
   (Photoinitiator, manufactured by BASF AG) 8.5 parts
• Benzophenone (photoinitiator) 4.0 parts
• IRGACURE 184
   (Photoinitiator, manufactured by Ciba Specialty Chemicals) 4.0 parts
• Isopropylthioxanthone (ITX) 1.0 part
• Byk 307
   (Antifoaming agent, manufactured by BYK Chemie GmbH) 0.05 part

The above components were mixed and the resultant mixture of each color was filtered with a filter of absolute filtration precision of 2 µm to obtain Black Ink 1, Cyan Ink 1, Magenta Ink 1 and Yellow ink 1.

### <Formation of Four-Color Inkjet Image>

Next, 100% coated image was formed on a recording medium using a commercially available inkjet recording apparatus equipped with a piezoelectric inkjet nozzle.

The ink-supplying system comprises a stock tank, a supply pipe, an ink-supplying tank immediately before inkjet head, a filter, and a piezoelectric inkjet head. The region from the ink-supplying tank to the inkjet head is thermally insulated and heated. The temperature sensors is disposed in the ink-supplying tank and near the nozzles of the inkjet head, respectively, so that the temperature of the nozzle portion is regulated constantly at 70±2°C.

The piezoelectric inkjet head (CA3 HEAD, manufactured by Toshiba Tec Co.) was operated such that the ejection was conducted at a resolution of 720×720 dpi to form multi-sized dots in an amount in a range of from 8 to 30 pl.

The exposure system, the main scanning speed and the injection frequency were adjusted so that the UV-A light was condensed at an illuminance on the exposure plane of 300 mW/cm² after the deposition of ink droplets and irradiation began 0.1 seconds after the deposition of ink droplets on the recording medium. Further, the exposure time was made variable to irradiate the exposure energy. The "dpi" referred to in the present invention means the number of dots per 2.54 cm.

Using each color ink as prepared above, they were ejected overlappingly in the order of black, cyan, magenta, and yellow at an environmental temperature of 25°C, and ultraviolet rays were irradiated for each color. Light exposure was performed such that the total exposure energy per one color was uniformly 900 mJ/cm², as energy for complete curing, to eliminate stickiness in a touch test.

As the recording medium, a grain aluminum support, a transparent biaxial stretched polypropylene film which has been surface-treated to have the printability, a soft vinyl chloride sheet (trade name: MPI1005, manufactured by Avery,), a cast- coated paper (trade name: ESPRICOAT C, manufactured by Nippon Paper Group Inc.) and a recycled paper (trade name: KJ-WPS610, manufactured by Kokuyo Co., Ltd.) were used.

### <Evaluation of Inkjet Image of Four Colors>

The following items were evaluated.

### - Curability -

When an inkjet image of four colors was recorded on the above recording medium, a high resolution image without dot bleeding was obtained in each recording medium. Moreover, in the fine quality papers, the ink was sufficiently cured without penetration of the ink to the backside, and odor due to the unreacted monomer was almost not generated.

### - Flexibility -

In Example 1, the inkjet image of four colors recorded on the transparent biaxial stretched polypropylene film has a sufficient flexibility, and exhibited no crack in the inkjet image of four colors even when bended.

### - Adhesiveness -

An adhesiveness test with respect to the peeling of the inkjet image of four colors recorded on each recording medium was performed by using a CELLOTAPE (registered trade mark). The inkjet image of four colors of Example 1 did not have a problem in this adhesiveness test.

### <Evaluation of Inkjet Image of Magenta Monochrome and Magenta Ink>

Inkjet images were formed in the same manner as in the case of the above inkjet image of four colors on the recording medium described in the following evaluation items, except that only magenta ink 1 was used as the ink. Evaluation of ink solubility, adhesiveness to recording medium and flexibility of cured product was performed on the magenta image and Magenta Ink 1 before image formation, according to the methods shown below. The results are shown in Table 1.

### - Solubility in Ink before Curing -

Magenta Ink 1 prepared was observed by visual inspection on turbidity, precipitation and phase separation. In the Table 1, "A" indicates that the precipitation and the phase separation were not observed, and "B" indicates that the deposition or the phase separation was observed.

### - Flexibility -

Evaluation of the flexibility was performed using a PVC sheet (manufactured by Avery) as the recording medium.

After the PVC sheet having the magenta image was bended for 10 times, the flexibility was evaluated by observing the degree of cracks generated in the cured film (image). This bending test is a visual evaluation which is a five-grade evaluation such that five points was evaluated as the state of no crack occurrence and three points or more was evaluated as the state of no problem for practical use.

### - Adhesiveness -

Visual evaluation of adhesiveness to the recording medium was performed using a corona-treated polypropylene sheet as the recording medium.

The corona-treated polypropylene sheet having the magenta image was evaluated according to a crosshatch test (EN ISO2409) and was expressed in terms of from 5B to 1B according to the ASTM method. "5B" is the grade for being evaluated as having most excellent adhesiveness, while "3B" or higher grades are evaluated as having no practical problem.

### [Example 2]

### <Magenta Ink 2>

Magenta Ink 2 was prepared in the same manner as in Example 1, except that, among the monomers used as the polymeric compound in Magenta Ink 1 which was prepared in Example 1, 20 parts by mass of the compound [exemplified compound (1)] represented by the Formula (1) was changed to 20 parts by mass of the [exemplified compound (2)].

A magenta image was formed in the same manner as in the image formation of Example 1, using Magenta Ink 2 prepared as above. Evaluation on the formed magenta image and Magenta Ink 2 before image formation was performed in the same manner as in the evaluation of the magenta image and the magenta ink of Example 1. The evaluation results are shown in Table 1.

### [Example 3]

### <Magenta Ink 3>

Magenta Ink 3 was prepared in the same manner as in Example 1, except that, among the monomers used as the polymeric compound in the Magenta Ink 1 which was prepared in Example 1, 20 parts by mass of the compound [exemplified compound (1)] represented by the Formula (1) was changed to 30 parts by mass of the [exemplified compound (3)].

A magenta image was formed in the same manner as in the image formation of Example 1, using Magenta Ink 3 prepared as above. Evaluation on the formed magenta image and Magenta Ink 3 before image formation was performed in the same manner as in the evaluation of the magenta image and the magenta ink of Example 1. The evaluation results are shown in Table 1.

### [Example 4]

### <Magenta Ink 4>

Magenta Ink 4 was prepared in the same manner as in Example 1, except that, among the monomers used as the polymeric compound in Magenta Ink 1 which was prepared in Example 1, 20 parts by mass of the compound [exemplified compound (1)] represented by the Formula (1) was changed to 30 parts by mass of the [exemplified compound (4)].

A magenta image was formed in the same manner as in the image formation of Example 1, using the Magenta Ink 4 prepared as above. Evaluation on the formed magenta image and the Magenta Ink 4 before image formation was performed in the same manner as in the evaluation of the magenta image and the magenta ink of Example 1. The evaluation results are shown in Table 1.

### [Example 5]

### <Magenta Ink 5>

The following components were mixed and the resultant mixture was filtered with a filter of absolute filtration precision of 2 µm to make Magenta Ink 5.
- Compound represented by the Formula (1)
   [Exemplified compound (9)]
   (SR351, manufactured by Sartomer Inc.) 5.0 parts
- N-Vinylcaprolactam 25.0 parts
- 2-Phenoxyethyl acrylate
   (SR339, manufactured by Sartomer Inc.) 36.4 parts
- SOLSPERSE 32000
   (Dispersant, manufactured by Noveon Inc.) 0.4 part
- CINQUASIA MAZENTA RT-355D
   (Pigment, manufactured by Ciba Specialty Chemicals) 3.6 parts
- GENORARD 16
   (Polymerization inhibitor, manufactured by Rahn AG) 0.05 part
- RAPI-CURE DVE-3
   (Vinyl ether compound, manufactured by ISP Europe Ltd.) 4.0 parts
- LUCIRIN TPO
   (Photoinitiator, manufactured by BASF AG) 8.5 parts
- Benzophenone (Photoinitiator) 4.0 parts
- IRGACURE 184
   (Photoinitiator, manufactured by Ciba Specialty Chemicals) 4.0 parts
- Isopropylthioxanthone
   (ITX) 1.0 part
- Byk 307
   (Antifoaming agent, manufactured by BYK Chemie GmbH) 0.05 part

A magenta image was formed in the same manner as in the image formation of Example 1, using the Magenta Ink 5 prepared as above. Evaluation on the formed magenta image and the Magenta Ink 5 before the image formation was performed in the same manner as in the evaluation of the magenta image and the magenta ink of Example 1. The evaluation results are shown in Table 1.

### [Comparative Example 1]

### <Magenta Ink 6>

Magenta Ink 6 was prepared in the same manner as in Example 1, except that, among the monomers used as the polymeric compound in the Magenta Ink 1 which was prepared in Example 1, 20 parts by mass of the compound [exemplified compound (1)] represented by the Formula (1) was changed to 20 parts by mass of 2-phenoxyethyl acrylate.

A magenta image was formed in the same manner as in the image formation of Example 1, using the Magenta Ink 6 prepared as above. Evaluation on the formed magenta image and Magenta Ink 6 before image formation was performed in the same manner as in the evaluation of the magenta image and the magenta ink of Example 1. The evaluation results are shown in Table 1.

### [Comparative Example 2]

### <Comparative Example 7>

Magenta Ink 7 was prepared in the same manner as in Example 1, except that, among the monomers used as the polymeric compound in the magenta ink 1 which was prepared in Example 1, 20 parts by mass of the compound [exemplified compound (1)] represented by the Formula (1) was changed to 20 parts by mass of the following comparative compound (1).

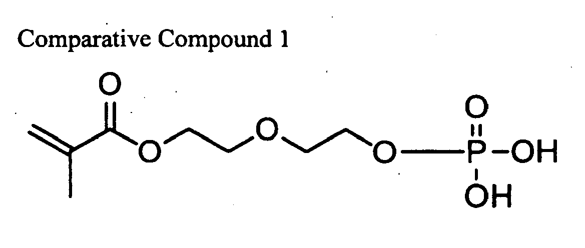

A magenta image was formed in the same manner as in the image formation of Example 1, using Magenta Ink 7 prepared as above. Evaluation on the formed magenta image and Magenta Ink 7 before image formation was performed in the same manner as in the evaluation of the magenta image and the magenta ink of Example 1. The evaluation results are shown in Table 1.

### [Comparative Example 3]

### <Magenta Ink 8>

Magenta Ink 8 was prepared in the same manner as in Example 1, except that, among the monomers used as the polymeric compound in the magenta ink 1 which was prepared in Example 5, 5 parts by mass of the compound [exemplified compound (9)] represented by the Formula (1) was changed to 5 parts by mass of the following comparative compound (2).

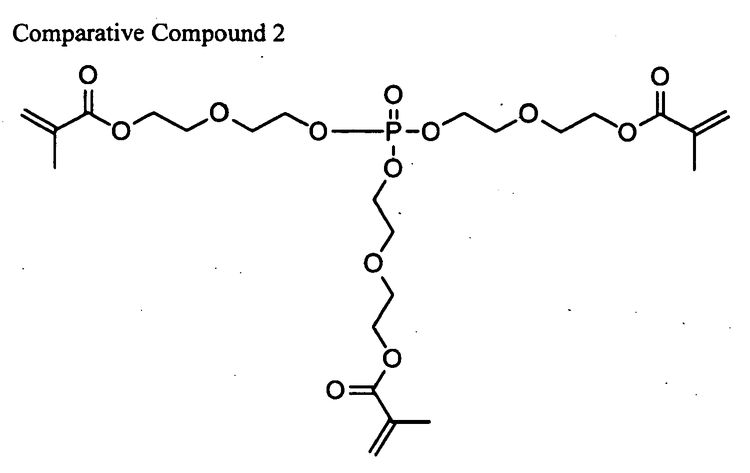

A magenta image was formed in the same manner as in the image formation of Example 1, using Magenta Ink 8 prepared as above. Evaluation on the formed magenta image and Magenta Ink 8 before image formation was performed in the same manner as in the evaluation of the magenta image and the magenta ink of Example 1. The evaluation results are shown in Table 1.

**[Table 1]**

| | Solubility in Ink | Flexibility | Adhesiveness |
|---|---|---|---|
| Example 1 | A | 5 | 5B |
| Example 2 | A | 5 | 5B |
| Example 3 | A | 4 | 4B |
| Example 4 | A | 4 | 4B |
| Example 5 | A | 4 | 5B |
| Comparative Example 1 | A | 3 | 1B |
| Comparative Example 2 | B | N.D. | N.D. |
| Comparative Example 3 | A | 1 | 3B |

| | | | |
|---|---|---|---|
| "N.D." means that evaluation could not be performed because of no dissolution in the ink composition. | | | |

In the ink compositions prepared in the above Examples and Comparative Examples, the ink viscosity at the ejection temperature of the ink was within the range of from 7 to 20 mPa·s.

As apparent from Table 1, the ink composition of each of Examples 1 to 5 are all excellent in the evaluation items including adhesiveness to the recording medium to be recorded, flexibility of the formed image, and solubility in the ink composition, which are all in the level of no problem for practical use.

Particularly, when the results of Examples 1 and 2 and the results of Examples 3 and 4 were compared, it was found that when among the compound represented by the Formula (1), the compound represented by the Formula (2-1) or (3-1) was used, such a compound is excellent in both of the adhesiveness and flexibility. Moreover, as a result of comparison between Example 1 and Example 5, the compound represented by the Formula (3-1) showed a more excellent effect of the flexibility than the compound represented by the Formula (2-1).

On the other hand, even in the case where a phosphoric acid ester was used, the ink composition of Example 2 using a phosphoric acid ester having a hydroxyl group could not be evaluated because the phosphoric acid ester did not dissolve in the ink composition.

Moreover, even in the case using the phosphoric acid ester, the ink composition in the Comparative Example 3 where the phosphoric acid ester was fully esterified by a group having a polymerizable double bond had a poor flexibility, and was inferior to this Example, though it showed a practically usable degree of adhesiveness.

The foregoing description of the embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

All publications, patent applications, and technical standards mentioned in this specification are herein incorporated by reference to the same extent as if each individual publication, patent application, or technical standard was specifically and individually indicated to be incorporated by reference.

## Claims

1. An ink composition for inkjet recording, comprising:
(A) a compound represented by the following Formula (1); and
(B) a radical polymerization initiator, 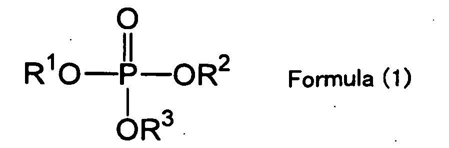
wherein R¹, R² and R³ each independently represent an alkyl group, an aryl group or a monovalent group having a polymerizable double bond; at least one of R¹, R² and R³ is an alkyl group or an aryl group; and at least one of R¹, R² and R³ is a monovalent group having a polymerizable double bond.

2. The ink composition for inkjet recording according to claim 1, further comprising (C) a colorant.

3. The ink composition for inkjet recording according to claims 1 or 2, wherein the compound represented by the Formula (1) is a compound represented by the following Formula (2) or (3): 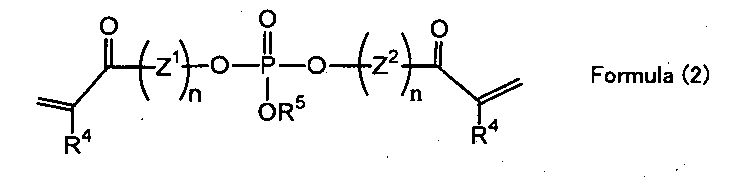 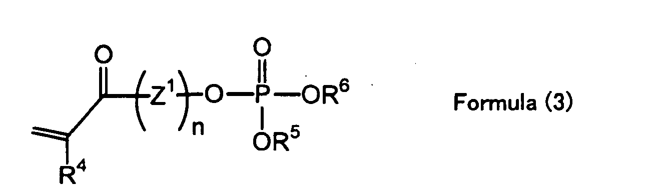 wherein R⁴ represents a methyl group or a hydrogen atom, R⁵ and R⁶ each independently represent an alkyl group or an aryl group, Z¹ and Z² each independently represent a divalent linking group, and n represents 0 or 1.

4. The ink composition for inkjet recording according to claims 1 or 2, wherein the compound represented by the Formula (1) is a compound represented by the following Formula (2-1) or (3-1): 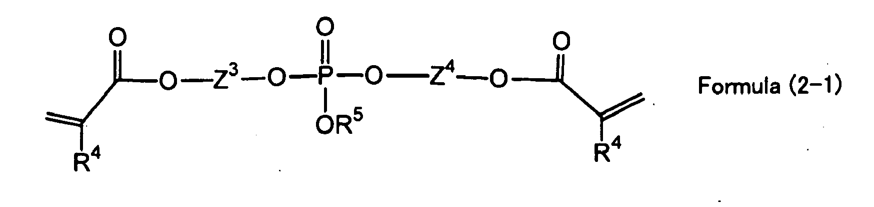 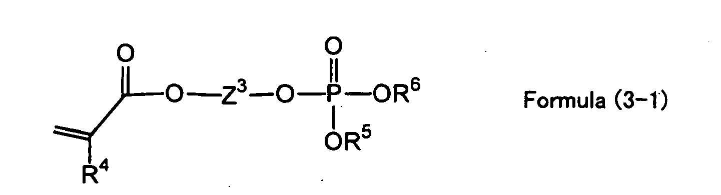 wherein R⁴ represents a methyl group or a hydrogen atom, R⁵ and R⁶ each independently represent an alkyl group or an aryl group, and Z³ and Z⁴ each independently represent a divalent linking group.

5. The ink composition for inkjet recording according to claim 4, wherein Z³ and Z⁴ of the Formula (2-1) or (3-1) each independently represent a linking group represented by the following Structural Formula (1): 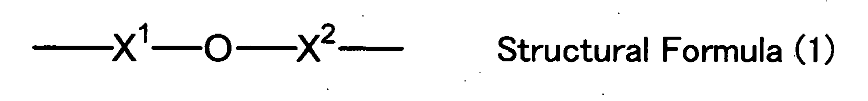 wherein X¹ and X² each independently represent an alkylene group.

6. The ink composition for inkjet recording according to any one of claims 1 to 5, wherein the radical polymerization initiator is contained within the range of from 0.01 to 35% by mass with regard to the total content of the compound represented by the Formula (1).

7. A method for inkjet recording, comprising:
ejecting the ink composition for inkjet recording according to any one of claims 1 to 6 onto a recording medium; and
curing the ejected ink composition for inkjet recording by irradiation with active radiation.

## Patentansprüche

1. Tintenzusammensetzung für die Tintenstrahl-Aufzeichnung, umfassend:
(A) eine durch die folgende Formel (1) dargestellte Verbindung; und
(B) einen Radikalpolymerisationsinitiator: 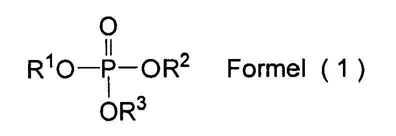
worin R¹, R² und R³ jeweils unabhängig voneinander eine Alkylgruppe, eine Arylgruppe oder eine monovalente Gruppe, die eine polymerisierbare Doppelbindung aufweist, darstellen; zumindest eines von R¹, R² und R³ eine Alkylgruppe oder eine Arylgruppe ist; und zumindest eines von R¹, R² und R³ eine monovalente Gruppe ist, die eine polymerisierbare Doppelbindung aufweist.

2. Tintenzusammensetzung für die Tintenstrahl-Aufzeichnung gemäss Anspruch 1, ferner umfassend (C) ein Färbemittel.

3. Tintenzusammensetzung für die Tintenstrahl-Aufzeichnung gemäss Anspruch 1 oder 2, worin die durch die Formel (1) dargestellte Verbindung eine durch die folgende Formel (2) oder (3) dargestellte Verbindung ist: 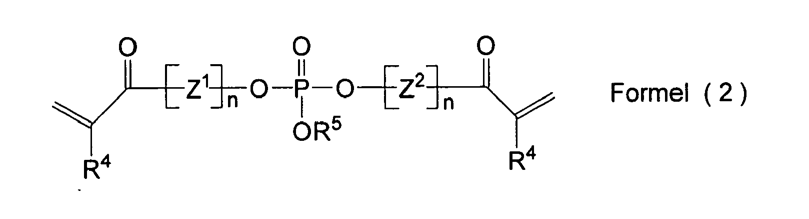 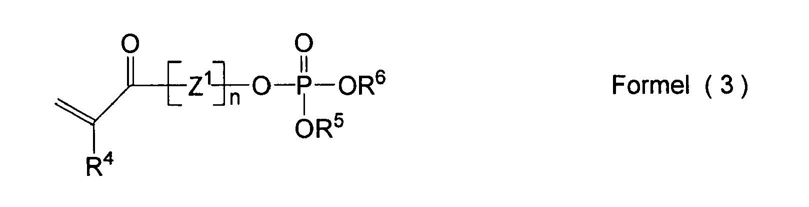 worin R⁴ eine Methylgruppe oder ein Wasserstoffatom darstellt, R⁵ und R⁶ jeweils unabhängig voneinander eine Alkylgruppe oder eine Arylgruppe darstellen, Z¹ und Z² jeweils unabhängig voneinander eine divalente Verknüpfungsgruppe darstellen, und n 0 oder 1 darstellt.

4. Tintenzusammensetzung für die Tintenstrahl-Aufzeichnung gemäss Anspruch 1 oder 2, worin die durch die Formel (1) dargestellte Verbindung eine durch die folgende Formel (2-1) oder (3-1) dargestellte Verbindung ist: 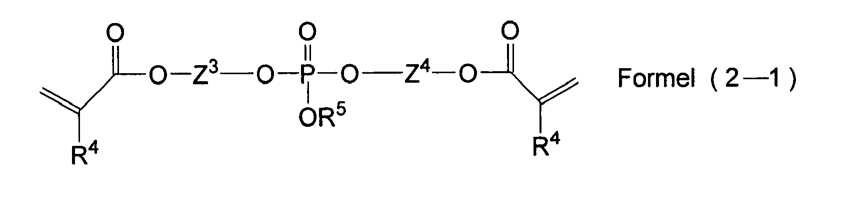 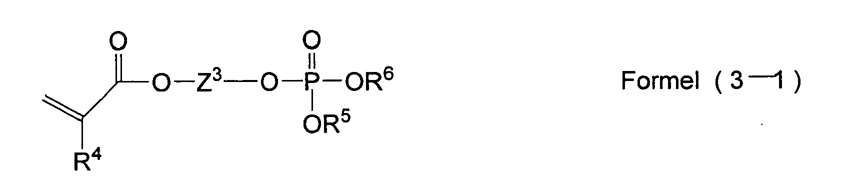 worin R⁴ eine Methylgruppe oder ein Wasserstoffatom darstellt, R⁵ und R⁶ jeweils unabhängig voneinander eine Alkylgruppe oder eine Arylgruppe darstellen und Z³ und Z⁴ jeweils unabhängig voneinander eine divalente Verknüpfungsgruppe darstellen.

5. Tintenzusammensetzung für die Tintenstrahl-Aufzeichnung gemäss Anspruch 4, worin Z³ und Z⁴ der Formel (2-1) oder (3-1) jeweils unabhängig voneinander eine Verknüpfungsgruppe darstellen, die durch die folgende Strukturformel (1) dargestellt wird: 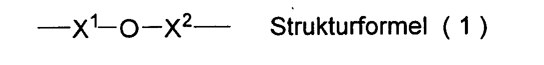 worin X¹ und X² jeweils unabhängig voneinander eine Alkylengruppe darstellen.

6. Tintenzusammensetzung für die Tintenstrahl-Aufzeichnung gemäss irgendeinem der Ansprüche 1 bis 5, worin der Radikalpolymerisationsinitiator im Bereich von 0,01 bis 35 Masse-%, in bezug auf den Gesamtgehalt der durch die Formel (1) dargestellten Verbindung, enthalten ist.

7. Verfahren zur Tintenstrahl-Aufzeichnung, umfassend:
Ausstossen der Tintenzusammensetzung für die Tintenstrahl-Aufzeichnung gemäss irgendeinem der Ansprüche 1 bis 6 auf ein Aufzeichnungsmedium; und
Härten der ausgestossenen Tintenzusammensetzung für die Tintenstrahl-Aufzeichnung durch Bestrahlung mit aktiver Strahlung.

## Revendications

1. Composition d'encre pour enregistrement à jet d'encre, comprenant :
(A) un composé représenté par la Formule (1) suivante ; et
(B) un initiateur de polymérisation par radicaux, 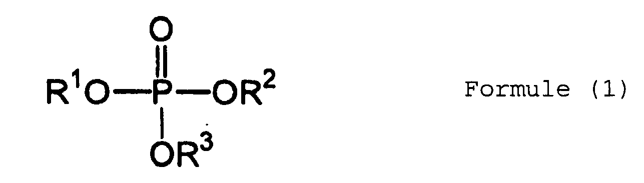 dans laquelle R¹, R² et R³ représentent chacun indépendamment un groupe alkyle, un groupe aryle ou un groupe monovalent ayant une liaison double polymérisable ; au moins l'un de R¹, R² et R³ est un groupe alkyle ou un groupe aryle ; et au moins l'un de R¹, R² et R³ est un groupe monovalent ayant une liaison double polymérisable.

2. Composition d'encre pour enregistrement à jet d'encre selon la revendication 1, comprenant en outre (C) un colorant.

3. Composition d'encre pour enregistrement à jet d'encre selon les revendications 1 ou 2, dans laquelle le composé représenté par la Formule (1) est un composé représenté par les Formules (2) ou (3) suivantes : 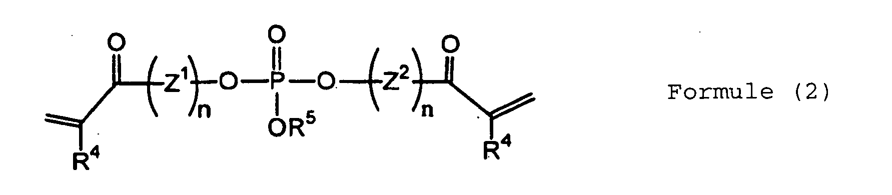 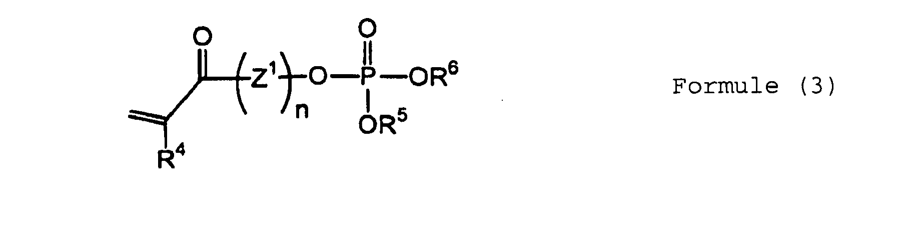 dans lesquelles R⁴ représente un groupe méthyle ou un atome d'hydrogène, R⁵ et R⁶ représentent chacun indépendamment un groupe alkyle ou un groupe aryle, Z¹ et Z² représentent chacun indépendamment un groupe de liaison divalente, et n représente 0 ou 1.

4. Composition d'encre pour enregistrement à jet d'encre selon les revendications 1 ou 2, dans laquelle le composé représenté par la Formule (1) est un composé représenté par les Formules (2-1) ou (3-1) suivantes : 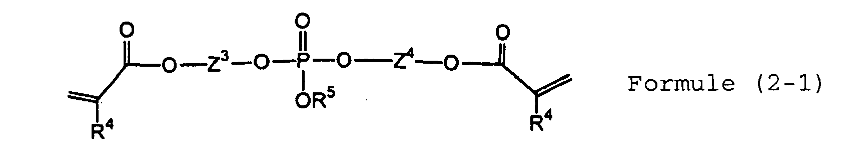 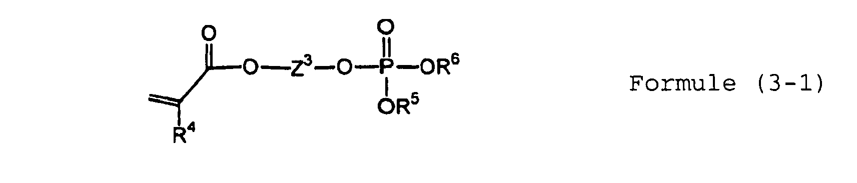 dans lesquelles R⁴ représente un groupe méthyle ou un atome d'hydrogène, R⁵ et R⁶ représentent chacun indépendamment un groupe alkyle ou un groupe aryle, et Z³ et Z⁴ représentent chacun indépendamment un groupe de liaison divalente.

5. Composition d'encre pour enregistrement à jet d'encre selon la revendication 4, dans laquelle Z³ et Z⁴ de la Formule (2-1) ou (3-1) représentent chacun indépendamment un groupe de liaison représenté par la Formule Structurelle (1) suivante : 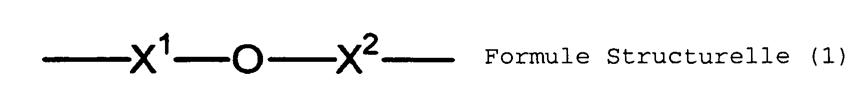 dans laquelle X¹ et X² représentent chacun indépendamment un groupe alkylène.

6. Composition d'encre pour enregistrement à jet d'encre selon l'une quelconque des revendications 1 à 5, dans laquelle l'initiateur de polymérisation par radicaux est contenu à l'intérieur de la plage allant de 0,01 à 35 % en masse par rapport à la teneur totale du composé représenté par la Formule (1).

7. Procédé pour enregistrement à jet d'encre, comprenant les étapes consistant à :
éjecter la composition d'encre pour enregistrement à jet d'encre selon l'une quelconque des revendications 1 à 6 sur un support d'enregistrement ; et
cuire la composition d'encre pour enregistrement à jet d'encre éjectée par irradiation par un rayonnement actif.
